# EUROPEAN PATENT SPECIFICATION

(11) **EP 4 437 668 B1**
(45) Date of publication and mention of the grant of the patent: **15.04.2026**
(21) Application number: 23708537.8
(22) Date of filing: 22.02.2023
(51) Int. Cl.: H04B 10/114, H04B 10/116

(54) **OPTICAL WIRELESS COMMUNICATION APPARATUS, SYSTEM AND METHOD**
OPTISCHE DRAHTLOSE KOMMUNIKATIONSVORRICHTUNG, SYSTEM UND VERFAHREN
APPAREIL, SYSTÈME ET PROCÉDÉ DE COMMUNICATION OPTIQUE SANS FIL

(30) Priority: 24.02.2022 GB 202202532; 13.05.2022 GB 202207022
(43) Date of publication of application: 02.10.2024
(73) Proprietor: PureLiFi Limited, Edinburgh EH6 6QH (GB)
(72) Inventor: AITKEN, Andrew William Ballantine, Edinburgh EH6 6QH (GB); AFGANI, Mostafa Zaman, Edinburgh Edinburgh (GB); WESZELY, Tamas, Edinburgh EH6 6QH (GB); METZGER, Nikolaus, Edinburgh EH6 6QH (GB); KOSMAN, John, Edinburgh EH6 6QH (GB); ROSSIUS, Arne, Edinburgh EH6 6QH (GB); SPERGA, Janis, Edinburgh EH6 6QH (GB); HAAS, Harald Ulrich, Edinburgh EH6 6QH (GB)
(74) Representative: Marks & Clerk LLP
(86) International application number: PCT/GB2023/050407
(87) International publication number: WO 2023/161632

(56) References cited:
- WO-A1-2021/209352
- US-B1- 11 025 338

## Description

### Introduction

The present invention relates to an optical wireless communication device, system and method.

### Background

It is known to provide wireless data communications using light instead of radio frequencies to transmit and receive data wirelessly between devices. Data may be transmitted using light by modulating at least one property of the light, for example the intensity of the light. Methods that use light to transmit data wirelessly may be referred to as optical wireless communications (OWC) or light communications (LC). LiFi is one form of optical wireless communication.

Some known OWC transceiver devices can have a wide zone of operation about a vertical axis. For example, some such known OWC transceiver devices used for example, in OWC network access points may have a single OWC light source/transmitter and receiver/photodetector and an operating zone or field-of-view (FOV) of approximately 60 degrees.

For energy consumption efficiency some known OWC transceiver devices may have power saving functionality by motion sensing such that when a remote device is not detected within a transmission zone or field-of-view of the OWC transceiver device the device is put to an intermediate or sleep state to save power. Examples of known OWC transceiver devices are described in WO 2012/20968 and EP 3704812.

Energy consumption of the OWC transceiver or access point is dependent partly on the type of light source or emitter and the desired level of light output power being transmitted. Known OWC devices can use any suitable light sources, for instance LEDs or vertical cavity semiconductor-based lasers (VCSELs) or other lasers as light sources that provide the light that is modulated according to OWC communication protocols to establish communication and to encode data. Such light sources can have operating characteristics that vary with temperature and the amount of heat produced by the light source or emitter is dependent on the rated power of the light source and efficiency of conversion of electrical energy to OWC light.

There is a need for an efficient low energy consumption OWC transceiver or access point which is capable of wide field of view transmission and high optical wireless communication data rate transfer to a suitable OWC receiving device.

WO2021209352A1 describes an optical wireless transceiver including a plurality of light sources and a plurality of photodetectors. Each light source has a different respective transmission field of view for transmission of modulated light signals and each photodetector has a different respective reception field of view for reception of modulated light signals. The optical wireless transceiver is configured to test at least one of the photodetectors, while receiving a preamble of a data packet, to determine whether that photodetector is receiving the preamble with a signal strength above a threshold signal strength and, if the tested photodetector is determined to have received the preamble with a signal strength above the threshold signal strength, activate at least one of the light sources that has a transmission field of view corresponding to the reception field of view of the tested photodetector.

### Summary

In a first aspect there is provided an optical wireless communication (OWC) transceiver apparatus as is defined in claim 1.

The selecting of the transmitter(s) may comprise controlling by the controller whether each transmitter is in a higher power state or a lower power state, optionally in a power-on or power-off state.

The determining of the location may comprise determining whether the remote device is present in one or more of the transmitter fields-of-view.

The selecting of the transmitter(s) to transmit OWC signals may comprise selecting one or more of the transmitters based on at least one of whether the remote device is determined to be present in, or within a threshold distance, of, or moving towards, or moving away from, the field(s)-of-view of said transmitter(s).

The controller may be configured to deselect, for example move to the lower power state, one or more of the transmitters in response to the remote device leaving the field-of-view of the one or more transmitters.

By selecting and deselecting one or more of the transmitters in dependence on the position of the remote device within the fields of view of the plurality of transmitters the OWC transmitter or transceiver apparatus may be configured to save energy.

The controller may be configured to deselect said one or more of the transmitters at a delay time following departure of the remote device leaving the field-of-view of the one or more transmitters.

The at least one detector may comprise a plurality of detectors, each having a respective different detector field of view, and optionally at least one of the plurality of detectors is associated with a respective different one of the transmitters.

The apparatus may further comprise one or more OWC receivers for receiving OWC signals transmitted according to an OWC protocol, optionally wherein each transmitter is associated with a corresponding OWC receiver having a respective receiver field of view in which OWC signals can be received, further optionally wherein the field of view of the transmitter is at least partly matched or overlapping with the field of view of the corresponding OWC receiver.

At least one of the OWC transmitter(s) and/or the OWC receiver(s) may comprise a freeform optical lens, optionally comprising freeform lenslets, optionally wherein at least one of the freeform optical lenslets has a freeform optical surface that is translationally or cylindrically asymmetric.

At least one of the OWC transmitter(s) may comprise a freeform optical lens which is configured to map or translate light from a transmitter light source onto a plane of reception in an operating region located in the OWC transmission field of view wherein the mapped or translated light has an intensity distribution of defined shape or perimeter or contour,
optionally wherein the defined shape or perimeter or contour is configured to interface with or match the defined shape or perimeter or contour of a transmission field of view of an adjacent transmitter thereby to reduce overlapping of the respective transmission field of views,
optionally wherein the intensity distribution within the transmission field of view across a plane of reception within the operating region is a uniform intensity distribution

The presence detector or detectors may be configured to detect at least one of movement, beacon signals, tone signals, signals transmitted by the client device, and/or are configured to perform a triangulation process, thereby to determine the location of the remote device, for example presence of the remote device in one or more of the transmitter fields-of-view.

The at least one detector may comprise at least one optical presence detector configured to detect signals from the remote device.

The at least one optical presence detector may be configured to determine the location of the device based on receipt of OWC signals without decoding the received OWC signals to extract data encoded in the OWC signals.

The apparatus may further comprise at least one OWC receiver for receiving OWC signals transmitted according to an OWC protocol, wherein the at least one optical presence detector may comprise a photodetector of lower received signal sensitivity than the at least one OWC receiver(s) at OWC transmission frequencies.

The at least one optical presence detector may be configured to detect a lower frequency part of an OWC signal, or a lower frequency OWC signal, for example a header or a beacon signal,
wherein the OWC signal may comprise a higher frequency part and/or an OWC protocol which includes higher frequency signals.

The at least one optical presence detector may comprise an energy detector, optionally a photodetector and/or pin diode.

The at least one optical presence detector may comprise at least one OWC receiver, configured to determine the location of the remote device based on OWC signals received from the remote device.

Each presence detector may have a field of view that is aligned with and/or at least partially matched to a field of view of a corresponding one or more of the transmitters.

The at least one presence detector may comprise a plurality of presence detectors with overlapping fields-of-view. The at least one presence detector may comprise at least one freeform optical lens.

The at least one presence detector may comprise a single detector, or a smaller number of detectors than the number of transmitters, and the detector(s) each may have a field of view larger than the individual field(s)-of-view of the transmitters.

The at least one presence detector may comprise a single OWC receiver. The single OWC receiver may be configured to receive OWC signals transmitted by a remote device from within or adjacent to any or all of the transmitter zones.

The apparatus may comprise at least one optical barrier, e.g. an optical presence detection barrier, and/or may comprise a freeform optical lens, configured to define and/or limit the optical field-of-view of at least one of the presence detectors and/or transmitters.

The at least one optical barrier may comprise a plurality of optical barriers, each associated with a respective one or more of the presence detectors. The freeform optical lens may comprise a plurality of optical lenses each associated with a respective one or more of the presence detectors

The optical barrier(s) and/or freeform optical lens(es) may be configured such that the field(s)-of-view have desired shapes, optionally such that the field(s)-of-view have desired geometrical shapes such as squares, rectangles, triangles, pentagons, hexagons, octagons circles or ovals, and/or such that the field(s) of view have at least a partially straight edge, for example in the desired area of operation of the remote device.

The optical barriers and/or freeform optical lens(es) may be configured such that the optical field(s)-of-view have a desired relative spacing, overlap, shape and/or size at a target distance from the apparatus.

The optical barriers and/or freeform optical lens(es) may be configured so that at least some, optionally all, of the optical presence detection fields-of-view adjoin or overlap at the or a target distance from the transmitter apparatus,

One or more of the optical barriers may be adjustable by a user and/or automatically, to alter the direction and/or size of the associated presence detector optical field(s)-of-view.

At least part of the optical barrier(s) may be replaceable by a user thereby to alter the associated field(s)-of-view and/or to alter at least one performance characteristic of the optical barrier(s) or associated presence detector(s).

For one or more of the optical barriers, and/or freeform optical lens, at least one of the presence detectors may be positioned within, behind or adjacent to said optical barrier or freeform optical lens, such that the optical barrier or freeform optical lens defines the field of view of a respective one or more of the detectors.

The optical barrier(s) may include a light-absorbent surface or layer, for example a roughened and/or blackened layer and/or a light-absorbent coating.

Each of the transmitter fields-of-view may have a respective central axis and each central axis may be at a different angle, for example with respect to a vertical axis defined with respect to the apparatus.

Said vertical axis may be substantially orthogonal to a plane on which the transmitters are located or that is at a minimum average distance from the transmitters.

The transmitters may be configured such that the field(s)-of-view have a desired relative spacing, overlap, shape and/or size at a target distance from the apparatus.

The transmitters may be configured so that at least some, optionally all, of at least part of the transmitter fields-of-view adjoin or overlap at a target distance from the apparatus, for example such that the selected operating transmitters provide a continuous combined transmission zone at the or a target distance from the apparatus.

The transmitters may be configured such that the field(s)-of-view have desired shapes, optionally such that the field(s)-of-view have desired geometrical shapes such as squares, rectangles, triangles, pentagons, hexagons, octagons circles or ovals, and/or such the field(s) of view have substantially straight edges.

A transmitter operating region may be understood as the region within a field of view in which a remote device may receive transmission signals. The transmitter FOV is the region in which the transmitter is configured to transmit signals. A field of view which has an elongated shape such that the plane of reception within an operating region has an elongated maximum horizontal dimension compared with the maximum vertical dimension may provide more energy efficient light transmission. This may for example be within a field of view transmitted along a horizontal axis where the upper area of the operating region is little used by a receiver of a remote device.

There may be provided optical barrier(s) or freeform optical lens(es) that are associated with the transmitters. The optical barriers and/or freeform optical lens(es) may be configured such that the optical field(s)-of-view of the transmitters have a desired relative spacing, overlap, shape and/or size at a target distance from the apparatus.

The controller may be configured to select the transmitters for transmission of OWC signals to maintain continuity of communication with the or at least one remote device.

The controller may be configured to select the transmitters for transmission of OWC signals to a plurality of remote devices each at a respective different position.

The transmission zone may comprise a plurality of non-contiguous transmission zones each for transmission of OWC signals to a respective different remote device and each comprising at least one respective transmission sub-zone.

The controller may be configured to select periodically, or in response to another condition, at least each non-selected transmitter, optionally each transmitter, and to send a beacon signal using each such selected transmitter.

The controller may be configured to de-select transmitter(s) in response to no reply from a remote device being received in response to the beacon signal(s).

The apparatus may be configured to provide increased optical power output (or decreased optical power output) by at least one of each selected transmitter if the number of selected operational transmitters decreases/is less than the maximum number of transmitters (or the number of selected transmitters increases).

The apparatus may be configured to provide substantially constant optical power output for the selected transmitters in combination.

The controller may be configured to vary optical power output for the selected transmitters in dependence on a measured or expected temperature of at least part of the apparatus and/or a measured or expected temperature of at least one of the transmitters.

The controller may be configured to vary data rate provided by OWC signals transmitted by selected transmitters in dependence on temperature of at least part of the apparatus and/or a measured or expected temperature of at least one of the transmitters and/or the number and/or location of selected transmitters.

The controller may be configured to vary optical power output for the selected transmitters and/or to vary the number and/or position of the transmitters that are selected, in order to maintain said temperature in a desired operating temperature range.

The apparatus may comprise at least one heatsink arranged to remove heat from at least one transmitter.

The OWC apparatus may comprise more than one heat sink, each heat sink being associated with a respective transmitter wherein at least one of the heat sink is in thermal connectivity with at least one other of the heat sinks, for example to form a combined heat sink.

For at least one transmitter the respective at least one thermal heat sink may be thermally connected to at least one other heat sink associated with at least one other transmitter and in operation the respective thermal heat sink may be at a lower temperature when at least one other transmitter is non-operational.

The apparatus may comprise a combined or shared heat sink for at least some of the transmitters and the maximum data transfer rate achieved by each transmitter may be dependent on the number of other transmitters in operation in thermal connectivity with the combined heat sink and/or the location of those transmitters in the combined heat sink.

The maximum data transfer rate achieved by each transmitter in thermal connectivity with the combined heat sink may be dependent on the temperature of the combined heat sink in the proximity of each light source and/or each transmitter

The at least one heatsink may comprise a heatsink that is in thermal connection to a plurality of the transmitter heatsinks, optionally in thermal connection to all of the transmitter heat sinks. The at least one heat sink may comprise a heat pipe. The at least one heat sink may comprise a finned heat sink. The at least one heat sink may comprise a plurality of sections, optionally that are connectable together and/or that are joined by at least one thermal bridge. At least part of the at least one heat sink may comprise at least part of an outer housing of the apparatus.

The transmitters may be included in a single unit and/or within a single housing.

At least one of the transmitters may be connectable via a wired or other connection to the or a unit or housing that includes the controller, such that said at least one of the transmitters is moveable relative to the unit or housing and/or is positionable to be remote from the housing.

The apparatus may comprise modulation circuitry that is configured to provide a modulation signal to at least the selected transmitters thereby to modulate a drive voltage or current so as to provide the OWC signals by modulating the light output by the selected transmitters optionally wherein the OWC signals conform to an OWC protocol.

The controlling by the controller whether each transmitter is in a higher power state or a lower power state may comprise controlling whether the drive voltage or current applied to the transmitter has a higher or lower value, optionally whether the drive voltage or current has an operating value or is substantially zero.

The modulation circuitry may be configured to provide the modulation signal to both the selected and non-selected transmitters.

The apparatus may comprise at least one receiver configured to receive OWC signals. At least one of the plurality of transmitters may have a field-of-view in a different direction or aligned to a different operating region compared to that of a field-of-view of the at least one receiver. The OWC signals transmitted by the at least one transmitter may comprise or represent at least part of the received OWC signals and/or at least some data included in the received OWC signals.

A receiver operating region may be understood as being the region in a receiver field of view in which signals from a remote device may be received. A transmitter operating region is defined as the region in a transmitter field of view in which a remote device may receive signals.

The field of view of the at least one receiver may be at least partly overlapping with the field of view of at least one of the plurality of transmitters.

The apparatus may be configured to transmit the OWC signals that comprise or represent the received OWC signals and/or at least some data included in the received OWC signals without decoding the received OWC signals.

The apparatus may be configured to transmit the OWC signals that comprise or represent at least part of the received OWC signals and/or at least some data included in the received OWC signal after decoding at least part of the received signal and then encoding at least part of the transmitted signal. The apparatus may be configured to transmit the OWC signals that comprise or represent at least part of the received signals or received and decoded/encoded OWC signals in a field of view having different direction to the field of view of the received OWC signals.

At least part of the received OWC signal may be amplified before retransmission.

The apparatus may comprise, or forms part of, an access point.

The access point may be connectable to a network, for example a local area network (LAN) and/or the internet or other remote network, via a wired connection and/or a mains power data connection and/or a wireless connection.

The OWC signals transmitted by the apparatus may include data received from the network and/or the OWC signals may establish and/or maintain a communication session via the network with the or a remote device.

At least one of the transmitters may be, or form part of, an illumination light source, for example an uplighter, downlighter, spot lamp, standard lamp or table lamp.

Each transmitter may comprise at least one light-emitting diode (LED) or vertical-cavity surface-emitting laser (VCSEL).

The OWC signals comprise LiFi signals. The OWC light signals may comprise modulated visible, infra-red ultraviolet or terahertz signals. The OWC signals may be in accordance with one or more of IEEE 802.15.7, 802.15.13, 802.11 or extensions or developments thereof; ITU-T G.9960 or extensions or developments thereof; or ITU-T G.vlc or extensions or developments thereof.

In a further aspect, which may be provided independently, there is provided an OWC transceiver comprising an apparatus as claimed or described herein, wherein the transmitter(s) may be configured to at least partially retransmit OWC signals, received by an OWC receiver and/or wherein the OWC receiver and the transmitter or transmitters may have respective fields of view aligned to the same or different operating regions, such that the OWC signals may be received by the OWC receiver from one operating region and at least partially re-transmitted by at least one of the transmitters aligned to the same and/or a different operating region, optionally wherein the re-transmission may be performed following at least partial decoding of the received OWC signals.

In a further aspect, which may be provided independently, there is provided an optical wireless communication (OWC) receiver apparatus comprising:
at least one OWC receiver, each of the at least one OWC receiver having a respective field-of-view in respect of which it is configured to receive OWC signals; and
a controller configured to select which of the at least one OWC receivers receive the OWC signals, thereby determining a reception zone from which the OWC signals are received by the apparatus, wherein
the OWC reception zone comprises at least one sub-zone, each sub-zone corresponding at least partially to the field-of-view of a respective at least one transmitter.

The OWC receiver may comprise OWC received signal processing circuitry that is common to the plurality of receivers.

The OWC received signal processing circuitry may be configured to sum or otherwise combine signals from all of the selected OWC receivers.

The OWC received signal processing circuitry may be configured to process signals from all of the selected OWC receivers thereby to extract data.

In another aspect, which may be provided independently, there is provided a method of optical wireless communication comprising selecting one or more transmitters of a plurality of transmitters, each transmitter having a respective field-of-view in respect of which it is configured to transmit OWC signals, thereby determining a transmission zone to which the OWC signals are transmitted by the apparatus, wherein
the transmission zone comprises at least one sub-zone, each sub-zone corresponding to the field-of-view of a respective one of the transmitters.

In a further aspect, which may be provided independently, there is provided an optical wireless communication system comprising:
an apparatus as claimed or described herein and configured to communicate with at least one remote device; and
the at least one remote device.

In another aspect, which may be provided independently, there is provided an OWC transceiver device employing subzones where the transmission subzones may be individually operated for transmission energy saving. The OWC transceiver device may employ optical or non-optical presence detection for the detection of a remote OWC device within or adjacent to a respective transmission sub zone where the presence detection is not an OWC receiver.

In another aspect, which may be provided independently, there is provided an OWC transceiver device employing subzones where the transmission subzones may be individually operated for transmission energy saving and where heat sinks associated with each transmission sub zone are thermally connected to provide higher operational efficiency and/or data rates.

There may be provided the or an optical wireless communication (OWC) transceiver device comprising:
at least one light transmitter configured to transmit light of a first wavelength or first range of wavelengths;
driver circuitry configured to receive a data signal and to process the data signal to produce a driving signal to drive the at least one light transmitter such that the at least one light transmitter produces a modulated optical signal representative of said data signal;
at least one receiver configured to receive light of a second wavelength or second range of wavelengths and to produce a detection signal in response to the received light;
receiver circuitry configured to receive and process the detection signal to produce a receiver signal;
demodulation circuitry configured to perform a decoding and/or demodulation process in accordance with an OWC protocol thereby to extract data from the receiver signal.

The receiver circuitry may comprise receiver optical front end circuitry. The driver circuitry may comprise transmitter optical front end circuitry. The demodulation circuitry may be provided as part of a baseband apparatus. The transceiver device apparatus may further comprise modulation circuitry configured to perform an encoding and/or modulation process in accordance with an OWC protocol thereby to encode data for the modulated optical signal. The modulation circuitry may be provided as part of a baseband apparatus. The demodulation and modulation circuitry may be provided as part of a baseband apparatus. The controller may comprise controlling circuitry. The transceiver device apparatus may further comprise a host processing resource for communicating with a network. The transceiver device apparatus may comprise or forms part of an access point for allowing access to a network. The transceiver device apparatus may be configured to receive at least part of an optical wireless communication signal re-transmitted by a remote device. The transceiver device apparatus may be configured to receive at least part of an optical wireless communication signal transmitted by the transceiver device apparatus and re-transmitted by a remote device. The at least one light transmitter is configured to transmit light signals through a first field of view.

There may be provided an efficient power saving OWC access point capable of high data rate transfer. The access point may have a field of view of operation of approximately 60 degrees but with improved operational power consumption characteristic. The OWC transceiver may also achieve this lower power consumption while providing an improved data rate transfer to a remote device.

Each transmitter sub zone may have an associated and respective presence detector for detecting presence of a remote OWC enabled device being within the transmission sub zone. When a remote OWC enabled device is presence detected the transmitter for that sub zone may be enabled. When the remote OWC enabled device is not detected in the transmission sub-zone or detected as being adjacent to the transmission sub-zone then the transmitter may be switched off or to a low power consumption mode. When optical wireless communication occurs within a subzone with a remote device located in that sub zone then transmitters of the transceiver device of the adjacent subzones need not be activated. If, for example, only half the subzones are active to communicate with the remote device then the power consumption of the OWC transceiver may be significantly reduced.

Multiple methods of detection may be employed to detect the remote device position such as movement detection, beacon signals, tone signals, triangulation, client transmitted signals etc. The presence detector may be an optical detector capable of also acting as an optical receiver for receiving of OWC signals transmitted by a remote device within or adjacent to the OWC transmitter sub zone. The presence detector may be an optical detector that is a general purpose, photodetector with insufficient response for full detection of incoming OWC signals at low light transmission levels but which is capable of detecting a low frequency element or component or packet signal of an OWC signal transmitted in accordance with an OWC protocol with or without an optical signal enhancing component. The photodetector may be used to detect the incoming remote generated OWC signal and thereby presence detection of a remote device without a requirement to decode the OWC signal. In applications where the remote device transmits optical signals to an optical detector or detectors to enable presence detection of the remote device position, the optical detector(s) may be associated with a respective transmitter(s) and transmitter sub zone(s) of the transceiver device.

In some configurations the presence detection may be implemented by optical detectors.

By providing multiple narrow field transmission zones with respective presence detection and OWC receivers or at least one OWC receiver to receive the uplink signal from the remote device operating in the area of subzone transmission, it is possible to provide OWC over a smaller operational zone. The uplink OWC receivers may be associated with each respective subzone or may be associated with more than one or with all sub zones.

The use of sub zones allows operation such that the average optical power or optical power density of the overall OWC operation zone comprising the combined fields of view of the plurality of transmitters of the OWC transmitter or transceiver apparatus may therefore be reduced with a consequent saving in energy. This benefit may require at least additional transmitters and additional presence detectors for each sub zone.

The transmission zone of the transceiver or transmitter OWC apparatus may have a total optical power capacity that may be distributed equally or unequally over the sub zones, and the optical power being transmitted or available for transmission in an operating subzone may be dependent at least partially on the number of sub zone transmitters in operation. The optical power being transmitted or available for transmission in each sub zone is at least partially dependent on the number of sub zone transmitters selected or in the process of selection by the controller.

The optical power density in at least one sub zone may be at least partly dependent on the operation or selection of the plurality of transmitters in other sub zones.

By increasing the optical power density or optical power within a sub-zone the operating distance of a remote receiving device or the data rate transfer to a remote device within the sub-zone may be increased.

The controller may be configured to prioritise available optical power for transmission in one sub-zone over at least one other sub-zone even if the respective sub-zones are selected for or are transmitting OWC signals. The optical power available to a transmitter in a sub-zone having priority may be increased in preference to the optical power available to a transmitter in another sub zone.

The controller may be configured to determine sub-zone transmitter priority and/or the available optical power in a subzone may be increased in response to a signal from the at least one OWC receiver and/or a signal from a presence detector. The signal received from the at least one OWC receiver may be derived from or comprise information on received data rate from at least one remote device or information on receiver SNR.

Alternatively, for a similar power consumption to that of the access point with single transmitter or transceiver wide field zone, the power consumption of an individual sub zone may be increased using a higher power sub zone transmitter thereby increasing the individual optical power density of the sub zone and increasing the effective operating transmission distance for the subzone OWC.

For reliable optical communication within the transmission sub zone at the typical operating distance of the remote device, the detection zone of the optical detectors(s) may be targeted to closely match that of the transmitter(s) zone at this operating range or distance and therefore where the OWC transmission zones overlap in a multi-transmitter installation, so the optical presence detection zones can overlap.

In some configurations the presence detectors may also be OWC receivers. Overlapping of the OWC receiver zones may be beneficial in that it may assist OWC data reception reliability at the edges of the OWC receiver detection area where the received signal gain is lower and the received signal is weaker or subject to greater interference.

With the use of the narrow sub zones it may be necessary that as the remote device moves between the transmission zones to ensure uninterrupted connectivity to the access point by activation of the transmission zones in which the remote or mobile device is detected or the adjacent zone in which it is anticipated the remote device will be detected.

To enable this un-interruption functionality the outer regions of the narrow transmission zones typically overlap and the system is provided with the capability of detecting in which transmission zone the remote device is present. When a device is in, or close to, an adjacent transmission zone the respective adjacent zone transmitter may then be activated.

In the overlapping presence detector regions, the position of the remote device may be less certain resulting in less certainty over the most effective transmitter to operate. To ensure reliable OWC access point transmission it may be that the transmitters associated or adjacent to the overlapping reception region are operational. When a remote device is no longer detected in a transmission sub zone a delay may be applied before the transmitter is deenergised.

The uncertainty associated with the remote device position in overlapping areas may therefore be associated with a non-optimal energy consumption cost.

The OWC transceiver device may comprise an illumination light source.

The OWC transceiver device may comprise an OWC transmission light source heat sink which is thermally connected to at least one further OWC transmission light source heat sink such that the operating temperature of at least one OWC transmission light source is reduced when at least one of the further OWC transmission light sources is not operational.

The OWC transmitter may comprise a light emitter device capable of transmission of optical wireless communication signals for example a VCSEL, VCSEL array, laser diode, light-emitting plasma (LEP) or LED, LED array or other suitable light source device. The or each transmitter may be configured to transmit infra-red light and/or visible light and/or ultra-violet light and/or any wavelength(s) of light suitable for OWC communication. The OWC communication may comprise LiFi communication. The OWC communication may be full-duplex and/or half-duplex .

The transmitter may further comprise conditioning, amplification and modulation circuitry. The transmitter may comprise an optical component to transmit the emitted light. The optical component may comprise a freeform optical lens. The transmitter may comprise or form part of an optical front end device.

In some embodiments each transmission zone has a respective OWC receiver - or an OWC receiver may provide reception coverage over more than one transmission sub zone. In some designs the centre of axis of the receiver field of view may also be aligned at an angle to the vertical axis through the centre of the OWC transceiver apparatus or device.

In some embodiments the OWC transmitter and/or the OWC receiver and/or presence detector may comprise a freeform optical lens comprising freeform optical lenslets and having a three dimensional freeform optical surface which comprises a lenslet freeform optical surface. The 3D freeform optical surface may comprise one or more steps or discontinuities between the lenslet optical surfaces of one or more adjacent lenslets. The freeform optical surface may comprise a change in a sign of a gradient of the 3D freeform optical surface between the lenslet optical surfaces of one or more adjacent lenslets.

At least one of the freeform optical lenslets may have a lenslet freeform optical surface that is translationally or cylindrically asymmetric.

A lenslet optical surface may be considered to be cylindrically asymmetric if the lenslet optical surface is not cylindrically symmetric e,g. the lenslet optical surface is not configured so that the lenslet optical surface remains unchanged after rotation of the lenslet optical surface through any angle about an axis of rotation. The axis of rotation may or may not extend through the lenslet optical surface.

The receiver may comprise a receiving element configured to detect modulating light. The receiving element may comprise at least one photodetector. Any suitable photodetector or photodetectors may be used. The photodetector may be sensitive to ultraviolet, visible and infrared wavelengths or any light wavelength suitable for optical wireless communication. In one embodiment, the receiver comprises at least one APD(avalanche photodiode). In other embodiments, the receiver comprises at least one Si PIN photodiode. In further embodiments, the receiver may comprise any photodetector that is capable of receiving light of suitable frequencies. For example, the receiver may comprise at least one Graphene-CMOS high-resolution sensor. In further embodiments, the STA receiver may comprise at least one silicon photomultiplier (SiPM) or single photon avalanche diode (SPAD) as the photodetector .

The receiver may comprise receiver circuitry that is configured to obtain a signal from the photodetector that is representative of the light received by the photodetector, and to process the signal from the photodetector to provide a receiver signal. The receiver may comprise or form part of an optical front end device.

There may be provided a transceiver apparatus or device configured to operate by use of segregated transmission zones for power saving and an associated operational algorithm. The zones may be angled with respect to the vertical axis through the centre of the transceiver device to cover a wide transmission zone. The optical presence detector or presence detector for transmitter operation may have a minimal area of overlap with an adjacent zone to improve efficiency of handover from one sub zone to another. A first optical detector may be used for the remote device presence detection within at least part of the transmission sub zone based on a low frequency component of an OWC protocol signal sent by the remote device and a second optical detector positioned at a different location may be used for detection and decoding of the same OWC protocol signal. The transceiver device may comprise at least one heatsink arranged to remove heat from at least one transmitter.

The heatsink may be a shared heatsink designed for distribution of heat from any one of the individual transmitters (TX) associated with the segregated sub zones. An individual transmitter may operate at lower temperatures when thermally connected to the larger heat transfer area of the shared or combined heatsink dependent on the number and location of the transmitters in operation and the duty cycle of operation of each individual transmitter when not operating at maximum data rate.

In a further aspect, which may be provided independently, there is provided an optical wireless communication system comprising a plurality of OWC transceiver apparatus as claimed or described herein wherein at least one of the plurality of OWC transceiver apparatus is orientated and positioned such a transmission field of view and/or a receiver field of view of the at least one OWC transceiver apparatus are aligned to different operating regions or are directed in different directions compared to the transmission field of view and/or reception field of view of a further one of the plurality of OWC transceiver apparatus;
optionally wherein at least two of the plurality of OWC transceiver apparatus are each configured with a baseband or modem device and
further optionally wherein at least two of the plurality of OWC transceiver apparatus share functionality and/or associated electric circuitry such as for example processing resource or power supply resource.

There may also be provided an apparatus. system and/or method substantially as described herein with reference to the accompanying drawings.

### Brief description of the drawings

Various embodiments will now be described by way of example only, and with reference to the accompanying drawings, of which:
Figure 1 is a block diagram of a transceiver device and remote device communicating using optical wireless communication;
Figure 2 is a more detailed schematic diagram of the transceiver device of Figure 1 configured to perform optical wireless communication;
Figure 3 is a schematic diagram illustrating a transceiver device and the fields-of-view of four transmitters in the transceiver device;
Figure 4 shows the fields-of-view of presence detectors of the transceiver device at a target distance from the device;
Figure 5 shows overlapping fields-of-view of detectors in an alternative embodiment;
Figure 6 is a schematic diagram of a detector;
Figure 7 is a schematic diagram showing heat sink elements associated with transmitters;
Figure 8 is a further view of the transceiver device, showing an outer housing that includes a heatsink; and
Figure 9 is a flowchart illustrating in overview procedures that may be performed according to certain embodiments.

### Detailed description

Optical wireless communication according to embodiments may, for example, be performed using visible or non-visible light in the form of electromagnetic waves with any suitable wavelengths, for example Terahertz, ultraviolet, visible light and/or near-infrared wavelengths.

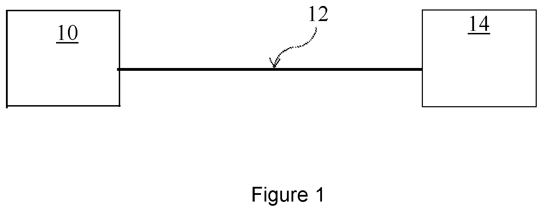

Embodiments described below are described in terms of optical wireless communication systems, for example LiFi systems. Figure 1 is a block diagram illustrating principles of optical wireless communication (OWC) according to embodiments. Figure 1 shows a transceiver device 10 and a remote device 14. The transceiver device 10 is configured to send OWC signals, in which information is encoded, through an optical communication channel 12 to the remote device 14. The optical communication channel 12 may be a free-space communication channel. The optical communication channel 12 has a characteristic wavelength. Free space communication channels include transmission of optical signals through air, space, vacuum, liquid such as water or similar.

The transceiver device 10 may comprise or form part of an access point and/or may provide access to a further network, for example the internet. Data connectivity to and/or from the access point device, for example to the further network, may be via network connection, wireless connection, PLC connection, PoE connection, OWC connection or other known data connections.

The remote device may be portable or fixed. Without limitation, examples of remote devices include personal computers, desktops, laptops, dongles and smart devices, including mobile devices (for example, mobile phones, tablets or digital book readers). The remote device may be powered by its own battery resource.

An access point may provide data transmission to and/or from a wired network or a Wi-Fi (RTM) or other wireless network and/or other optical wireless communications network, optionally a LiFi network.

Any suitable modulation scheme may be used for the optical wireless communication between the transceiver device 10 and the remote device 14. For example, orthogonal frequency division multiplexing (OFDM) modulation schemes are used in some embodiments. In further embodiments and without limitation, other modulation schemes may be used, for example on-off keying (00K), phase shift keying (PSK), M-ary pulse amplitude modulation (M-PAM), M-ary quadrature amplitude modulation (M-QAM), Discrete Hartley transformation, Wavelet packet division multiplexing (WPDM), Hadamard coded modulation (HCM), pulse-position modulation (PPM), Colour shift keying (CSK), carrier-less amplitude and phase (CAP), or discrete multi-tone (DMT). The light may be modulated at a modulation rate between 1 kHz and 1 PHz, for example at a modulation rate between 1 MHz and 100 GHz.

The modulation scheme may form part of an OWC communication protocol, such that the optical signal is produced according to the OWC communication protocol. The OWC communication protocol may be packet-based.

The transceiver device can have both a receiver apparatus, for example as described herein, and a transmitter apparatus, for example as described herein, provided as part of the same device.

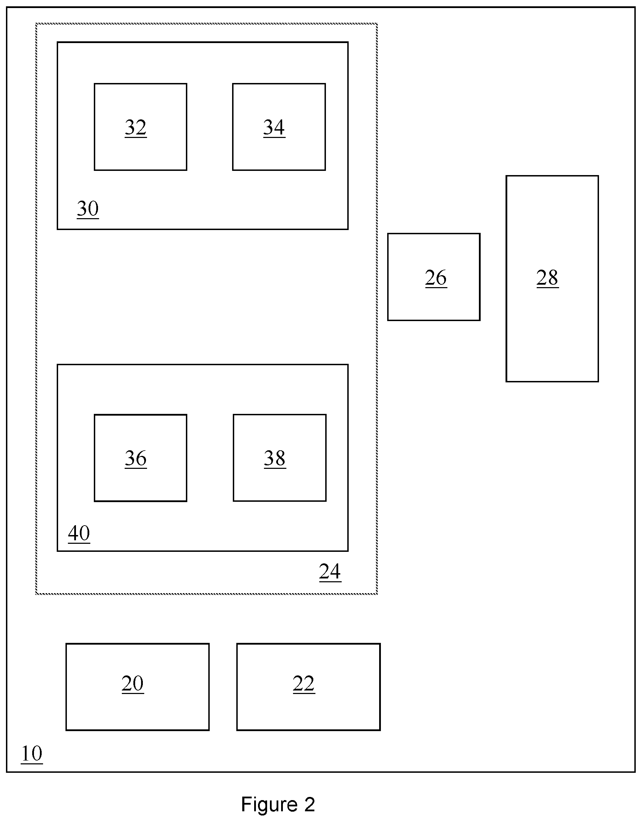

It is a feature of embodiments that selective activation of different transmitters of the transmitter apparatus can be provided, based on for example on a position of the remote device. Before such functionality is described further, components of the transceiver device 10 according to certain embodiments are described in relation to Figure 2.

Figure 2 is a more detailed schematic diagram of the transceiver device 10 that uses optical wireless communication. The transceiver device 10 has OWC transmitter optical front end 30 and OWC receiver optical front end 40.

In Figure 2, the transmitter optical front end 30 and the receiver optical front end 40 are shown as forming part of an optical front end 24 of the transceiver device 10.

OWC transmitter optical front end 30 has a plurality of light transmitters 32 and transmitter optical front end circuitry 34 for producing optical wireless communication signals for transmission by the light transmitters 32. Any suitable circuitry may be used in embodiments, for example, any circuitry for providing suitably modulated signals in accordance with a Li-Fi protocol or other OWC communications protocol.

In the system of Figure 2, the light transmitters 32 are four light transmitters, 32a, 32b, 32c, 32d, each with a respective different field of view.

The transceiver device (10) also has at least one presence detector 20 and a controller 22. In the present embodiment the at least one presence detector 20 consists of four presence detectors 20a, 20b, 20c, 20d, each with a respective different field of view in which a remote device may be detected.

The controller may comprise any suitable programmed or programmable processor or other computing device. In some embodiments the controller comprises dedicated control circuitry, for example one or more ASICs or FPGAs or other dedicated electronic circuitry. The controller may comprise or be connected to a memory that stores computer program instructions and/or data that is executable and/or readable by the controller.

As discussed in more detail below, in the system of Figure 2, each of the presence detectors 20a, 20b, 20c, 20d is associated with a respective different one of the transmitters 32a, 32b, 32c, 32d and the field-of-view of each presence detector 20a, 20b, 20c, 20d is generally aligned with its associated transmitter 32a, 32b, 32c, 32d.

The system of Figure 2 also includes an OWC receiver, described further below, and the presence detectors 20a, 20b, 20c, 20d are different from the OWC receiver.

In the system of Figure 2, each presence detector 20a, 20b, 20c, 20d comprises at least one light sensor that is configured to detect at least part of an OWC communication signal from a remote device, thereby to detect the presence of the remote device. It is a feature of the system of Figure 2 that the presence detector comprises at least one light energy detector of lower sensitivity and/or frequency than an OWC receiver used for receiving and decoding OWC signals but of sensitivity and/or frequency response capable of detecting at least part of such OWC signals. For example, an OWC signal may comprise a lower frequency component or characteristic and a higher frequency component or characteristic, for example according to an OWC protocol, and the at least one light energy detector may be capable of detecting the lower frequency component or characteristic. The at least one light energy detector may be capable of detecting the presence of the remote device without decoding the received OWC signal to extract the data encoded into it. In the present embodiment, the presence detector may comprise a photodetector with a lower sensitivity or frequency response than an OWC receiver at OWC transmission frequencies. The at least one light energy detector in the system of Figure 2 is a photodetector or pin photo diode.

In other embodiments, the presence detector 20 (e.g. the individual presence detectors 20a, 20b, 20c, 20d) comprise or use one or more of movement detection, beacon signals, triangulation, an infrared sensor, a microwave sensor, an ultrasonic sensor, a tomographic sensor, a radar system, a video camera sensor, a gesture detector, in order to detect the presence of a remote device and/or a user of the remote device.

In alternative embodiments, the OWC receiver(s) can be used both as the presence detector for detecting presence and/or location of the remote device and for receiving and decoding the OWC signals (e.g. uplink signals from a remote device). In such embodiments, separate presence detector(s) may be not provided.

The controller 22 comprises circuitry configured to send control signals to one or more parts of the OWC receiver and transmitter optical front end circuitries. The controller 22 may also be referred to as controlling circuitry. The controller 22 also comprises signal monitoring circuitry. The signal monitoring circuitry is configured to monitor and/or receive signals from the presence detector 20 and/or one or more parts of the OWC receiver optical front end 40. The controller 22 sends control signals based on the monitored signals. The controller 22 is configured to send control signals to one or more components of the transceiver device 10. The controller has the ability to choose which of the plurality of transmitters 32a, 32b, 32c, 32d is in an operational or power up state and thereby transmitting OWC signals at any time. In this way, the controller is able to select the transmission zone where OWC transmission signals are being radiated.

The signal monitoring circuitry of the controller 22 is provided to monitor output from the presence detectors 20a, 20b, 20c, 20d (and/or in some embodiments optionally at least one of the photodetector 36, the receiver optical front end circuitry 38 and the baseband apparatus 26). The controller 22 is configured to move one or more of the transmitters 32a, 32b, 32c, 32d between an off or a lower power state and a higher power state, for example to perform one or more power up and/or power down procedures on, or in relation to the transmitters 32a, 32b, 32c, 32d, based on the monitored output.

In embodiments where the controller 22 has more than one component, one component of the controller 22 may be configured to perform a power up or power down procedure on another component of the controller 22. In some embodiments, the controller 22 can perform a power up or power down procedure on itself and/or on the presence detector(s) 20.

The controller can, for example, select which transmitter 32a, 32b, 32c, 32d is transmitting at any given instant by moving it from a power up state to a power down state or from a power down state to a power up state. In some embodiments, the power up state may correspond to a higher power state or a power-on state and the power down state may correspond to a lower power state of a power-off state.

In the system of Figure 2, the transceiver device 10 has a host resource 28, which, for brevity may be referred to as a host. The host resource 28 may also be referred to as a host processing resource. The host resource 28 is configured to perform higher level network communication protocol functions like networking and transport. The host resource may comprise any suitable processing circuitry, and may comprise hardware, software or any suitable combination of hardware and software and/or firmware.

In other embodiments, the host resource 28 is provided separately from the transceiver device components of OWC transmitter optical front end circuitry 34, OWC receiver optical front end circuitry 38, presence detector 20 and baseband apparatus 26.

Although schematically shown as a separate component in Figure 2, in some embodiments, the controller 22, or at least part of the controller 22, is provided as part of the host resource 28.

In Figure 2, the OWC transmitter optical front end circuitry 34 has driver circuitry associated with light transmitter 32 (e.g. light transmitters 32a, 32b, 32c, 32d). The driver circuitry is in communication with the baseband apparatus 26 that performs signal processing.

The OWC transmitter optical front end circuitry 34 also has additional circuitry for example, conditioning, filtering, equalization and/or amplifying circuitry. The light transmitter 32 is configured to be driven by a drive signal, from the driver circuitry, to produce modulated optical signals.

The light transmitters 32a, 32b, 32c, 32d can include any suitable light source configured to transmit modulated light signals. The light source can be a light emitting diode (LED), for example, microLEDs, or a laser, for example, a vertical-cavity surface-emitting laser (VCSEL). The light source is configured to transmit light having a first wavelength. The light source may transmit visible or non-visible light. In some embodiments, more than one light source configured to transmit light having different wavelengths is provided.

The baseband apparatus 26 receives digital data from the host resource 28 and provides analogue signals to the OWC transmitter optical front end 30. A digital to analogue converter (not shown) is provided within the baseband apparatus 26 to convert digital signals of the host 28 to analogue signals for the OWC transmitter optical front end 30. The baseband apparatus 26 modulates the received data onto a drive current and the driving circuitry of the transmitter optical front end circuitry 34 provides the drive current to the LED or laser. The LED or laser then produces an outgoing modulated optical wireless communication signal that carries the data. The transmitter optical front end circuitry 34 may also be referred to as transmitter circuitry.

Although in the above described embodiment, the analogue to digital and digital to analogue converters are provided as part of the baseband apparatus, these may also be provided separately in other embodiments.

Receiver optical front end 40 has a photodetector 36 and associated receiver optical front end circuitry 38. The receiver optical front end circuitry 38 is in communication with the baseband apparatus 26. The receiver optical front end circuitry 38 may also be referred to as receiver circuitry. The receiver optical front end circuitry is, or forms part of, an OWC receiver that receives OWC signals transmitted according to an OWC protocol, for example by the remote device.

As mentioned above, in the system of Figure 2, the presence detectors 20, 20b, 20c, 20d are separate from the OWC receiver, and the OWC receiver is not used for the presence detection that determines which of the transmitters are operational, for example, which of the transmitters are in lower power or higher power states. In alternative embodiments, the at least one OWC receiver(s) is used for both receving OWC signal and for presence detection.

The photodetector of the OWC receiver 36 may be any one of: a PIN diode, an Avalanche Photo Diode (APD), a Silicon Photomultiplier (SiPM) or similar, or any other suitable photodetector. Although referred to as a photodetector, the photodetector 36 can be a single photodetector or a plurality of photodetectors. In some embodiments, the plurality of photodetectors are arranged in an array or a matrix.

The photodetector 36 is configured to receive light and convert the received light into an electronic detection signal. The receiver optical front end circuitry 38 is arranged to be in electrical communication with the photodetector 36 such that detection signals can be received by the receiver optical front end circuitry 38.

The receiver optical front end circuitry 38 is configured to receive electrical signals from the photodetector 36 and pass these electrical signals to the baseband apparatus 26 for demodulating. The receiver optical front end circuitry 38 processes the detection signal from the photodetector 36 and produces receiver signals. Processing of this signal includes conditioning, which may include one or more filter steps; amplification of a weak electrical signal and/or equalisation of received signals. Therefore, the receiver optical front end circuitry 38 produces and transmits an analogue detector signal.

An analogue to digital converter in the baseband apparatus 26 is also provided to receive the analogue detection signal and perform an analogue to digital conversion process. The baseband apparatus 26 then performs a demodulating or decoding process on the digital signals.

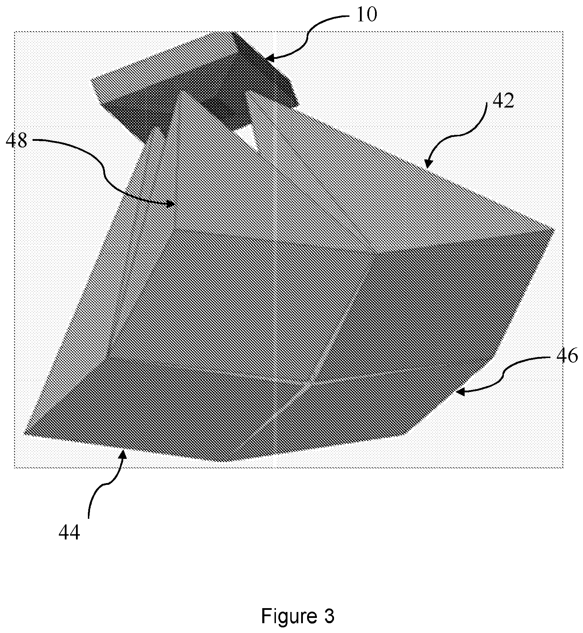

Figure 3 is a schematic diagram showing the fields-of-view 42, 44, 46, 48 of the four light transmitters 32a, 32b, 32c, 32d of the transceiver device 10 of Figure 2. The fields-of-view extend away from the transceiver device in generally four-sided pyramidal shapes with axes perpendicular to the plane and vertices located in the plane in which the light transmitters 32a, 32b, 32c, 32d are located. This plane may, for example, a plane of a circuit board on which the transmitters are mounted.

As the fields-of-view extend away from the light transmitters 32a, 32b, 32c, 32d, they start to intersect one another. The transceiver device 10 is configured such that at a typical distance from the transceiver device 10 where a remote device 14 is expected to be located, which can also be referred to as a target distance, the fields-of-view overlap or are at least contiguous. For example, in a domestic, office or retail environment the transceiver device 10 may, for example, be mounted on a ceiling for instance as part of an access point. The target distance in such circumstances may be the distance between the ceiling and around waist height or desk height, where a user's remote device may be expected to be located, for example 2-3 feet off the floor or 0.5 m to 1.5 m off the floor.

The presence detectors 20a, 20b, 20c, 20d also have respective fields-of-view. In the system of Figure 2, the field-of-view of each of the presence detectors is aligned with and/or at least partially matched to a field-of-view of a corresponding respective one of the transmitters 32a, 32b, 32c, 32d.

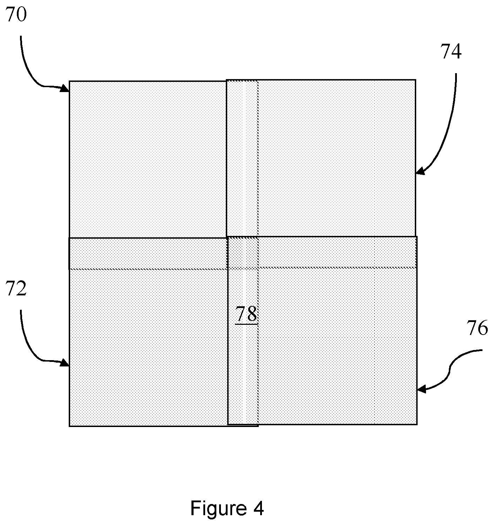

Figure 4 is a schematic illustration of a cross-section of the fields-of-view 70, 72, 74, 76 of the presence detectors 20a, 20b, 20c, 20d at the target distance from the transceiver device 10. As is the case for the transmitters 32a, 32b, 32c, 32d in this embodiment, the fields of view of the presence detectors 20a, 20b, 20c, 20d are four-sided pyramids, and thus when seen in the horizontal plane the fields-of-view or sub-zones appear as squares with overlapping edges as illustrated. An area of sub-zone or field-of-view overlap 78 is indicated where the sub-zones or fields-of-view of two or more adjacent presence detectors 20a, 20b, 20c, 20d overlap.

In the example of Figures 3 and 4, the fields-of-view of the transmitters 32a, 32b, 32c, 32d are at least partially the same as, and aligned with, the fields-of-view of the presence detectors 20a, 20b, 20c, 20d. Thus, the fields-of-view of the transmitters 32a, 32b, 32c, 32d at the target distance are at least partially the same as the fields-of-view shown in Figure 4 for the presence detectors 20a, 20b, 20c, 20d.

In operation, the controller 22 selects which of the transmitters 32a, 32b, 32c, 32d transmit the OWC signals, thereby determining a transmission zone to which the OWC signals are transmitted by the apparatus. Thus, it can be understood that in operation the transmission zone at any point in time comprises at least one sub-zone, each sub-zone corresponding to the field-of-view of a respective one of the transmitters. For example, if the controller 22 were to select transmitters 32c, 32d then OWC signals would be transmitted over the fields-of-view 44, 46 as shown in Figure 3, each of which would then be considered to a transmission sub-zone, and the combination of the fields-of-view 44, 46 would together make up the transmission zone. At the target distance the transmission sub-zones would at least partially correspond to areas 72, 76 and may overlap in region 78 as shown in Figure 4 (bearing in mind that in this example, the fields-of-view of the transmitters and the presence detectors are at least partially the same). The same OWC signals and data streams may be transmitted by the selected transmitters, and thus across the transmission zone.

The size and shape of the fields-of-view of the presence detectors 20a, 20b, 20c, 20d and/or of the transmitters 32a, 32b, 32c, 32d can be defined, limited and/or determined at least in part by one or more optical barriers and/or other optical elements.

The transceiver device 10 in the present embodiment includes optical barriers 120a, 120b, 120c, 120d (not shown in Figure 3, for clarity) each associated with a respective one of the presence detectors 20a, 20b, 20c, 20d, wherein each presence detector 20a, 20b, 20c, 20d is positioned within the boundary of the associated optical barrier. In this example, the optical barrier boundaries have a square shape leading to a four-sided pyramid shaped fields-of-view for the presence detectors.

The transceiver device 10 in the present embodiment also includes optical barriers and/or freeform optical lenses each associated with a respective one of the presence detectors 32a, 32b, 32c, 32d, wherein each presence detector 32a, 32b, 32c, 32d is positioned within the boundary of the associated optical barrier. In this example, again the boundaries of the optical barriers have a square shape.

The effect of the optical barriers or freeform optical lenses associated with the transmitters depends at least partially on the type of the lights source of the transmitters. For example, LED light sources will usually produce a beam of light of significant width, and which spreads with distance from the source, which may for example be cone-shaped in the absence of the optical barriers. The optical barriers can be used to absorb, reflect or otherwise block the beam at its edge and thus control its shape. The freeform optical lenses may be used to map or redirect light from the transmitter light sources to desired field of view shapes. For a laser, or array of lasers, the direction of the produced light beam will be much narrower and will usually depend on the alignment of the laser(s). Optical barriers may still be used to block any misaligned laser beams, to select laser beams and/or for protective purposes.

The optical barriers or freeform optical lenses for the presence detectors can be used to define the field-of-view over which the presence detectors receive optical signals, given that optical signals will generally travel in straight lines and the field-of-view will generally follow line-of-sight to the detectors, and/or any optical elements included in the detectors.

In the present described embodiment the optical barriers have square shapes, but the barriers or freeform optical lenses can have any desired shape or other configuration, for example such that the field(s)-of-view have desired shapes, optionally such that the field(s)-of-view have desired geometrical shapes such as squares, rectangles, triangles, pentagons, hexagons, octagons circles or ovals, and/or such that the field(s) of view have at least a partial straight edge in the desired area of operation of the remote device and/or at the target distance.

The barriers may be adjustable manually by a user, for example to alter their orientation, extent or shape, thereby to alter the field(s)-of-view. In other embodiments, the barriers may be adjustable, automatically or on command of a user, by operation of actuators under control of the controller 22. In some embodiments, one or more of the barriers or freeform optical lenses may be replaceable for a barrier or freeform optical lens of different performance characteristics.

The barriers or freeform optical lenses may have a variety of different characteristics in various embodiments. For example, one or more of the optical presence detection barriers or freeform optical lenses may be adjustable by a user and/or automatically, to alter the direction and/or size of the associated presence detector optical field(s)-of-view.

The optical barrier(s) and/or freeform optical lens(es) may be selected to define or limit the field-of-view of the optical transmitter, detector or receiver. At least part of an optical barrier(s) and/or freeform optical lens(es) may limit an optical detector or receiver field of view (FOV) such that at least part of the optical detector or receiver sub zone field of view edge profile comprises a flat or straight portion or profile.

At least part of the optical barrier surface surrounding the detector/receiver or transmitter may be selected to absorb indirect incident light such as by roughening, use of low gloss or black or absorbent surface treatments etc.

At least part of the limiting edge or surface of the optical barrier may be manually or automatically adjusted before or during operation to optimise or change the cut-off zone of the optical detector/receiver.

An optical barrier and/or freeform optical lens may also be applied to limit the sub zone transmitter coverage. At least part of an optical barrier(s) or freeform optical lens may limit the sub zone transmitter coverage such that at least part of the transmitter sub zone field of view outer edge profile comprises a flat or straight portion or profile.

The transmitter sub zone field of view edge profile may be orientated or at least partially aligned or matching to presence detector edge limit or cut-off at the desired nominal distance of remote device operation.

In configurations to reduce the uncertainty associated with overlapping areas the outer edge limit of the presence detector field of view may have a clearly defined edge limit or cut-off so that the detection or reception zone has improved cut-off definition and overlapping areas are reduced. The presence detector field of view may be determined at the optimum or target or nominal operational distance or distances for transmission and/or reception of signals from and to the remote device

Preferably the presence detector edge limit or cut-off is of a shape at least partially aligned or matching to an adjacent edge limit of a second or further edge limit associated with a further presence detector.

At least a portion of the presence detector field of view edge limit may comprise a flat or straight portion or profile. The flat or straight profile of the edge limit of the presence detector or receiver can be aligned with the flat profile of an edge limit of an adjacent further presence detector or receiver to reduce overlapping areas. The further presence detector (20) or receiver may be in an adjacent transmission subzone or in same transmission sub zone.

The optical detector outer edge limit may have increased definition, sharpness or contrast by using an optical gain component to improve the received optical signal and providing an optical barrier to sharply limit the optical gain component field of view.

The optical barrier may increase the definition of the edge limit of the optical detector and reduce unwanted stray light and light interference to further increase the signal contrast. A freeform optical lens may be used to increase the definition of the optical presence detector field of view .

The edge limit of each sub zone detector may be matched to the transmitter profile of each respective sub zone transmitter at nominal desired operating distance.

The flat or straight profile of the presence detector field of view may represent a reliable remote device detection to within a defined certainty. The flat profile certainty of remote device detection may be >50% , > 80% , >90% certainty at the optimum or target remote device operating distance. The certainty is obtained by moving a remote device at the optimum or target or nominal operating plane normal to the central sensing axis of the presence detector. A datum line is created on the plane outside the FOV. The remote is moved along a line normal to the datum towards the FOV until the remote device is detected. This position is recorded on datum(x) and distance from datum to detection point (y). Measurements are repeated at different x points along the datum. Calculate the regression line and R2 for the FOV detection edge profile over a chosen series of x positions along the datum. These datum positions should be limited to the FOV edge region where a straight line is anticipated. Calculate and plot the residual values to confirm they are approximately centred on zero with no obvious pattern and randomly dispersed. With R2 > 80% the FOV edge profile can be considered straight over at least part of the FOV edge profile. Measuring the remote device position may require consistent use of the remote device, e.g. in orientation or direction of approach, to achieve a precise presence detection measurement method.

The optical barrier and/or freeform optical lens may create a desired overlap profile with an adjacent detector/receiver and/or transmitter profile. The barrier profile may be at least partially straight or rectangular or hexagonal to enable efficient overlapping of adjacent sub zone detector/reception and transmission zone edges.

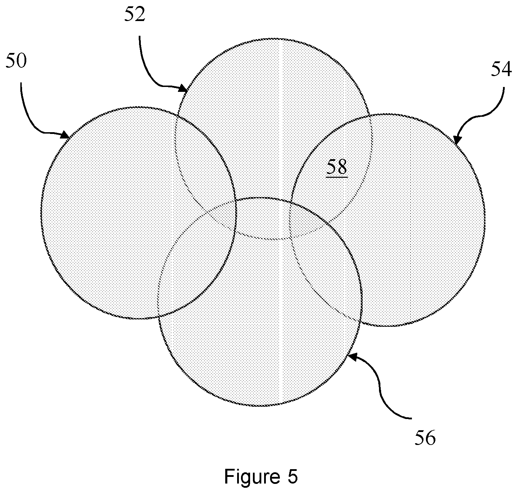

In embodiments where the fields of view are cones, when seen in a horizontal plane, their projections will appear as circles with overlapping edges as illustrated in Figure 5. In Figure 5, first, second, third and fourth fields of view 50, 52, 54, 56 are fields of view of the four presence detectors. An area of overlap 58 is also shown where the fields of view of two or more adjacent transmitters overlap. It can be seen that there are multiple regions where different sub-zones zones overlap. Curved presence detection regions or fields of view can in some cases result in greater uncertainly of position of remote device location than for fields of view with straight edges.

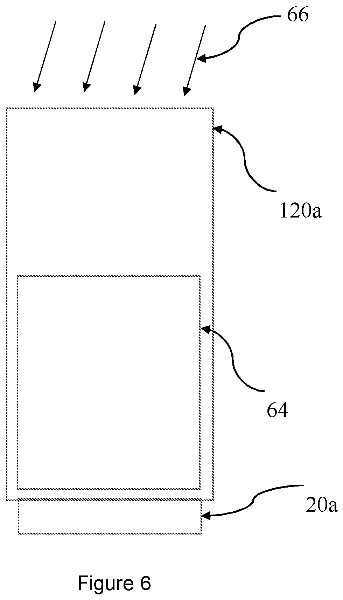

For both the transmitters and OWC receivers and the presence detectors, further optical elements may be provided as well as or instead of the optical barriers, for example to expand, reduce, align or otherwise define fields-of-view, and/or to provide diffusive or amplification or focusing of received or transmitted light. For example, as illustrated schematically in Figure 6, in a variant of the system of Figure 2, an optical element 64 may be associated with one or more of the presence detectors 20a to improve optical gain and to enhance the received light signal 66 from a remote device. The optical element may for example comprise a lens or a freeform lens comprising optical lenslets or an optical concentrator. The optical element may comprise an optical filter. Figure 6 also shows the optical barrier 120a. Each of the other presence detectors, and the transmitters, can have an optical barrier, for example of the same or similar form (e.g. corresponding optical barriers 120b, 120c, 120d of the same or similar form to the optical barrier 120a). In some embodiments, optical barriers (e.g. 120a) can be provided without associated optical elements (e.g. 64) or *vice versa.*

Optical elements may be provided without optical barriers, for example when freeform optical lenses are used. The freeform optical lens may be designed to provide some of the optical performance of an optical barrier for example, a receiver field-of-view cut-off or receiver field of view definition region around at least part of the periphery of the optical presence detector receiving field of view when the light incident on or from the outer limits of the field of view is mapped onto the photodetector. Also the freeform lens may be designed to map or translate light received by the freeform lens over an incident light lens region of one shape onto a light sensitive photodetector area of another shape.

A freeform optical lens comprising optical lenslets where the light incident on at least one lenslet surface is mapped or translated or directed to a target region of the light sensitive photodetector may be used to concentrate the incident light on the photodetector with a comparable optical gain to that of a more traditional plano-convex lens or compound parabolic concentrator(CPC) but with a thickness which is reduced by a factor of greater than two relative to the thickness of the concentrator or plano-convex lens. The freeform optical lens may be configured to have high refractive power, and/or short focal length and/or a wide field-of-view (FOV) with a reduced optical lens thickness in comparison to plano-convex lens or CPC. The freeform optical component may also be lightweight and/or may comprise a plastic material.

For the receiver application the freeform optical lens can be used to map or translate or direct the light received by the freeform lens from different angles of incidence such that a desired intensity distribution may be incident on the light sensitive photodetector for the at least part of the receiver field of view. The desired intensity distribution may be a uniform intensity profile. The desired intensity distribution may be defined or delineated over at least a part of the periphery of the receiver field of view.

The periphery or at least part of the periphery of a transmitter field of view may be defined as the points which represent a reliable remote device receiver connection to within a defined certainty. At the optimum or target remote device operating distance represented by an operating plane normal to the central axis of the transmitter the certainty of a reliable connection on at least part of the periphery of the transmitter FOV, is defined by confidence intervals (CI) on remote device positions that produce a specific measured data rate or by confidence intervals on predicted remote device positions for a specific connectivity performance for example, data rate.

The specific data rate is dependent on the characteristics of the transmitter and remote device as well as the remote device position relative to the FOV. The position of the remote device that first produces the specific data rate is recorded as the device is moved along a vector on the operating plane towards the FOV. This measurement is repeated on the same vector to obtain the CI on the edge position of the transmitter FOV to a level of > 80% or > 90% CI. The measurement is then taken at different positions around at least part of the FOV periphery. Measuring the remote device position may require consistent use of the device eg in orientation or direction of approach to achieve precise remote device connectivity results.

Alternative methods of predicting at least part of the transmission FOV for example, using sufficiently well defined lux intensity measurement or estimation techniques in conjunction with known or measured correlation characteristics of these techniques to remote device connectivity performance, may be used to determine or estimate FOV edge points and edge profiles to within the above levels of certainty..

A uniform intensity distribution of the transmitted light may be considered to be an intensity distribution measured within the periphery of the transmitter field of view where a plane of reception is defined normal to the central axis of the transmitter field of view and the central half area of the plane of reception has an average lux intensity that is less than fifteen times the average lux intensity value of the peripheral half area of the plane of reception area.

Mapping can be used to refer to a prescribed way of assigning the light flux incident on a lenslet optical surface to a target region on the photodetector.

The freeform optical lens may also be used to map or translate or direct the light onto the photodetector to achieve a desired freeform optical lens field of view.

Turning to operation of the device 10, it has been described above that the presence detectors 20a-20d are configured to determine the presence of a remote OWC device within the field-of-view of one or more of the detectors 20a-20d, thereby determining the location of the device and/or the presence of the device within a field-of-view of one or more of the associated transmitters 32a-32d.

In operation, the controller 22 is configured to power up or power down one or more of the transmitters 32a-32d in response to the presence detector 20 detecting the presence or absence of the remote device within one or more of the respective fields of view associated with the transmitters.

In some embodiments, any suitable movement between a higher power state or lower power state may be performed as well as or in place of the powering-up or powering-down. The higher power state may be one in which an operational drive current or voltage is provided to the transmitter, and the lower power state may be one in which zero or a lower driver current or voltage is provided to the transmitter. In some embodiments the modulation signal may still be provided to the transmitter even in the lower power state but in the absence of a drive current or voltage it may produce no or minimal amplitude OWC signal.

In the case of a transceiver device with more than one transmitter, the transmitters associated with each sub zone or sector are operated only when an OWC remote device is detected in or adjacent to, or is anticipated as being in or adjacent to, the respective associated sub zone. Each transmission sub zone may comprise at least one OWC transmitter. In some embodiments each transmission zone has a respective OWC receiver - or an OWC receiver may provide reception coverage over more than one transmission sub zone. In some designs the receiver and transmitter may also be aligned at an angle to the vertical axis of the apparatus.

By providing multiple narrow field transmission zones with respective presence detection and OWC receivers or an OWC receiver to cover the uplink signal from the remote device operating in the area of subzone transmission, it is possible to provide OWC over a smaller operational region or zone. The uplink OWC receivers may be associated with each respective subzone or may be associated with more than one or with all sub zones.

The average optical power or optical power density of the overall OWC operation region or zone is therefore reduced with a consequent saving in energy. This benefit requires at least additional transmitters and additional presence detectors for each sub zone.

Alternatively, for a similar power consumption to that of the access point with single transmitter or transceiver wide field zone, the power consumption of an individual sub zone may be increased using a higher power sub zone transmitter thereby increasing the individual optical power density of the sub zone and increasing the effective operating transmission distance for the subzone OWC.

For reliable optical communication within the transmission sub zone at the typical operating distance of the remote device, the detection zone of the optical detectors(s) may be targeted to closely match that of the transmitter(s) zone at this operating range or distance and therefore where the OWC transmission zones overlap in a multi-transmitter installation, so the optical presence detection zones can overlap.

Any suitable control algorithm can be applied by the controller 22. In some embodiments, the decision of the controller may depend not only on detecting presence or lack thereof within a field-of-view, but may include being within a distance of a field-of-view or moving towards or away from the field-of-view of a transmitter, thereby to provide for efficient handover between transmitters and to provide continuity of service. In the case of the remote device leaving one or more fields-of-view, the controller may apply a delay time before powering down one or more transmitters.

The controller 22 may be configured to select the transmitters for transmission of OWC signals to a plurality of remote devices each at a respective different position. The transmission zone comprises a plurality of non-contiguous transmission zones each for transmission of OWC signals to a respective different remote device and each comprising at least one respective transmission sub-zone.

The controller may be configured to select periodically, or in response to another condition, at least each non-selected transmitter, optionally each transmitter, and to send a beacon signal using each such selected transmitter. The controller may be configured to de-select transmitter(s) in response to no reply from a remote device being received in response to the beacon signal(s).

A feature in some embodiments of the ability to selectively control operation of the transmitters, in addition to potentially reducing overall power consumption, arises from the fact that for many light sources that can form part of the transmitters, operating characteristics can vary with temperature. Therefore, by selectively controlling operation of the transmitters it may, for example, be possible to avoid or reduce the chance of a light source overheating, or to increase, decrease or otherwise vary operating current or other operating parameter to increase, decrease or vary signal power or other parameter if it is known or expected that operation of a particular transmitter (for example due to the remote device remaining in its field of view for a significant period of time) may be moving away from its optimal operating range, for example due to expected or measured rise or fall in temperature.

For VCSEL devices and other light sources having similar characteristics, the efficiency of conversion is at least partly dependent on the temperature of operation of the light source device. Increasing the electrical power to the light source may cause an increase in temperature and a corresponding reduction in efficiency of optical power conversion. A drop in optical output power may result in a reduced signal to noise ratio (SNR), that may result in a reduced data rate and coverage area.

For certain types of OWC modulation in particular, for example OFDM, high transmitter and receiver linearity is desirable and therefore it can be necessary to operate the light source or emitter of the transmitter over a region where light output has a relatively linear relationship to input power. When energy conversion efficiency is reduced depending on the operating conditions of the transmitter, the linearity of the VCSELs or other transmitter light sources may drop and this may result in reduction of data rate and transmission zone coverage area.

Given the potential variation of operating properties as a function of temperature, various embodiments include heat sinks.

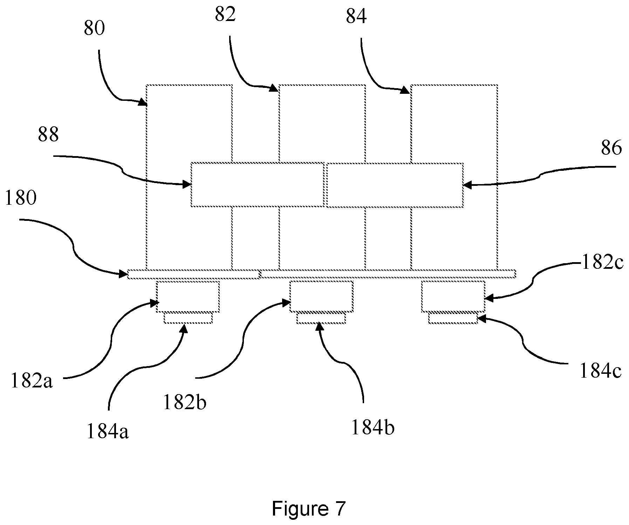

Figure 7 is a schematic diagram of transmitter arrangement according to an embodiment, in light sources 184a, 184b, 184c are attached to a circuit board 180 via source mounts 182a, 182b, 182c. Each light source 184a-184c may be, or form part of a transmitter, for example transmitters 32a-32c.

Individual heat sinks 80, 82, 84 associated with the first, second and third transmitters can be seen on the opposite side of the circuit board 180. Thermal bridge 86 connects heat sinks 82 and 84 while thermal bridge 88 connects heat sinks 80 and 82.

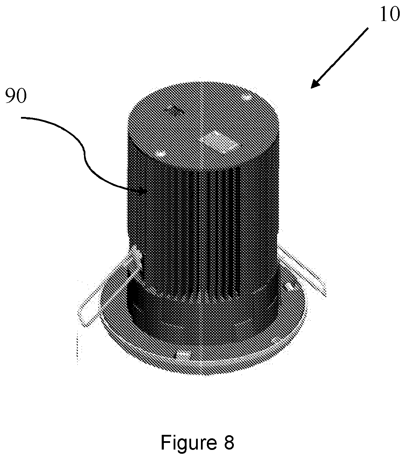

Figure 8 is a perspective view of the transceiver device 10 from the side of the circuit board 180 opposite to that from which the transmitters transmit radiation. The device 10 includes a outer housing 90 that in this embodiment includes a further, finned heat sink as part of its outer surface, and which extends around the majority of the circumference of the housing 90. The finned heat sink is in physical contact with the heat sinks 80, 82, 84 and/or the thermal bridge 86 or 88, either directly or indirectly, thereby to provide heat conduction from the light sources to the finned heat sink.

Any other suitable heat sink arrangements can be provided in other embodiments. The light source used for OWC transmission may be a high electrical power consumption light source and each sub zone transmitter (e.g. 32a-32d) may have a respective heat sink to conduct generated heat away from the light source in some embodiments. In some embodiments the heat sinks associated with each transmitter may be shared or combined and/or integral with an outer housing heatsink.

For certain types of OWC modulation in particular, for example OFDM, high transmitter and receiver linearity is desirable and therefore it can be necessary to operate the light source or emitter of the transmitter over a region where light output has a relatively linear relationship to input power. When energy conversion efficiency is reduced depending on the operating conditions of the transmitter, the linearity of the VCSELs or other transmitter light sources may drop and this may result in reduction of data rate and transmission zone coverage area.

The transceiver device with sub transmission zones can utilise the temperature dependence of the VCSEL or alternative light source to maximise the data rate transmission performance. Each transmitter associated with a sub zone may have an associated heat sink element. When sub zone heat sinks are thermally bridged such that at least two or more transmitter sub zone heat sinks are in thermal connection then the effective heat sink area per operating transmitter is increased if only one of the transmitters is in operation.

While the transceiver sub zone device can operate all sub zone transmitters at the same time should circumstances require it, for example when there may be multiple remote devices in communication within the transmission zone. There will be other circumstances in which only a reduced percentage of the OWC transmitters are simultaneously operating. For example if the transceiver device has four OWC transmitters and only one is operational, then that one transmitter benefits from a heat sink that is effectively four times larger than would otherwise be the case.

The or each OWC sub zone transmitter heat sink(s) may comprise a heat pipe. The OWC sub zone transmitter heat sink may be partially or fully combined with at least one further OWC transmitter heat sink to form an integrated heat sink. The integrated heat sink may be one piece or split into sections for ease of assembly. The integrated heat sink may comprise at least part of the outer housing of the OWC transceiver device.

The larger heat sink provides greater heat rate removal and can enable the transmitter light source to operate at a reduced temperature for a defined optical output power. A lower operating temperature may enable more efficient electrical/optical energy conversion, and for OFDM type OWC protocols the maximum date rate transfer may be correspondingly increased

Alternatively for a fixed date rate the greater heat removal enables a lower operating temperature of the device which may enable increased operating lifetime of the light source, as most semiconductor light sources have a lifetime that decreases, for example exponentially, with temperature.

In some embodiments the controller 22 is configured to control operation to provide increased optical power output (or decreased optical power output) by at least one of each selected transmitter if the number of selected operational transmitters decreases or is less than the maximum number of transmitters (or increases).

The controller 22 may be configured to control operation to provide substantially constant optical power output for the selected transmitters in combination.

The controller may be configured to vary optical power output for the selected transmitters in dependence on a temperature of at least part of the apparatus and/or a temperature of at least one of the transmitters. In such embodiments one or more sensors may be included to measure temperature and/or the temperature may be an expected temperature based on the characteristics of the device and the operation of the transmitters over a preceding period of time. The expected temperature may be determined based on a previously obtained calibration and/or by thermal modelling.

The controller may be configured to vary optical power output for the selected transmitters and/or to vary the number and/or position of the transmitters that are selected, in order to maintain the or a temperature at a desired or predicted operating temperature range. Alternatively or additionally the heat sink arrangement may be such as to maintain the transmitters in a desired operating range, for example a desired operating temperature range.

The controller may be configured to vary data rate provided by OWC signals transmitted by selected transmitters in dependence on temperature and/or the number and/or location of selected transmitters. For example the data rata of the modulation signal provided to the selected transmitter or transmitters may be varied by the controller in dependence on temperature and/or the number and/or location of selected transmitters. Thus, for example, for higher measured or expected temperatures, or temperatures outside a desired or optimal range, the data rate could be reduced as the signal quality may be expected to be lower. This may occur automatically due to temperature change and/or may be actively controlled by the controller in accordance with a control algorithm.

The transmission data rate can be altered in dependence of the temperature of the light source or emitter or transmitter. The transmission data rate may be increased as the operating temperature reduces. The transmission data rate may be altered in dependence of an algorithm based on the temperature of the at least one transmitter and/or the duty cycle of the further transmitters in operation. The transmission data rate may be controlled in dependence on the number of further transmitters in operation or in dependence of the duty cycle of the transmitters.

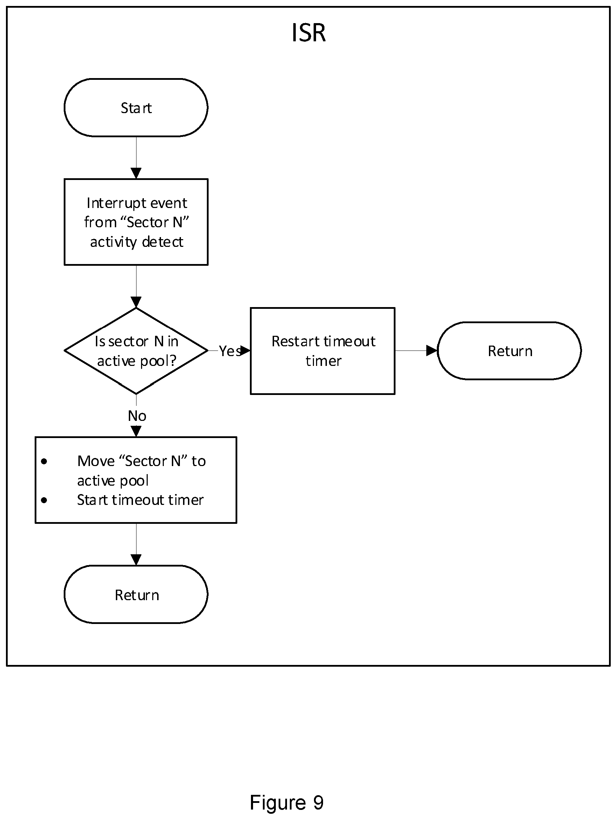

As mentioned, any desired algorithm can be applied by controller 22, to activate and deactivate transmitters by moving them between higher power and lower power states. Figure 9 is a flow chart that illustrate a time out procedure that may be applied to transmitters, each have an optical front end (OFE) and an associated presence detector, and all included in an access point (AP). The time out procedure may be referred to as an interrupt service routine (ISR).

References to active sectors may be considered to refer to transmission sub-zones or fields-of-view for which the transmitters are transmitting OWC signals. Transmitters that are in a higher power state and transmitting OWC signals, or available to transmit OWC signals, may be considered to be in an active pool, and those that are in the lower power state may be considered to be in an inactive pool. As represented in the flow chart, a transmitter may be moved to the active pool, or a timeout period may be restarted, if a remote device is determined to be present in a corresponding sector (e.g. field of view for associated detector) or if other relevant activity is detected. If no further relevant activity is detected then, in response to a timeout timer reaching the end of the timeout period, the transmitter may be moved to the inactive pool (e.g. moves to a lower power state and/or stops transmitting OWC signals).

The use of time-out periods can, for example, lead to reduced power consumption for instance if a remote device is no longer present in a field-of-view of a detector or transmitter, and/or if the remote device is present but no longer active for example no longer transmitting OWC signals or related signals, or has not done so during a timeout period.

In some embodiments the light sources of the transmitters are also illumination light sources configured to illuminate a room or other space. Thus, OWC communication in such embodiments can be provided by modulation of the light used for illumination.

In some embodiments, the OWC transmitter(s) may be configured to at least partially retransmit OWC signals, or content of OWC signals, received by one or more OWC receiver(s) of the device. The re-transmissions may be performed following decoding of the received signal optionally signal conditioning and then re-encoding of the signal to be transmitted or may be performed without decoding. The receiver(s) and transmitter(s) used may have fields-of-view in different directions or aligned to different operating regions, such that an OWC signal may be received from one direction and at least partially re-transmitted in a different direction.

An OWC transmitter sub zone may retransmit at least part of an OWC received uplink signal. The retransmission of at least part of the OWC received uplink signal may be in the same direction, or aligned to an operating region in an overlapping location, as the received signal or may be in a different direction or aligned to different operating region(s).. One or more OWC received uplink signals may be retransmitted by at least one transmitter. At least part of one or more OWC received uplink signal(s) may be retransmitted by more than one transmitter where each of the more than one transmitter is directed in a different direction or aligned to different operating region(s). Each of the one or more transmitter may transmit at least part of the OWC received signal. The OWC transceiver device may or may not have a data or network connection.

The OWC transceiver device may comprise a modem and a signal conditioner and/or amplifier to signal condition and/or amplify at least part of the OWC received uplink signal before retransmission . The OWC transceiver device may comprise a modem to decode and reencode at least part of the OWC received uplink signal before retransmission of the signal.

It is understood that in embodiments an OWC transceiver or transmitter device does not need to include all components indicated in Figure 2. For example, baseband circuitry andor a host resource may not be included in some embodiments. Any suitable transmitter and/or receiver front ends may be used, and any suitable type and number of transmitter(s) and/or receiver(s).

As mentioned, in some embodiments, the OWC receiver(s) themselves can function as the presence detectors, based on receipt of OWC signals from the remote device. In some such embodiments, the signal monitoring circuitry of the controller 22 is configured to monitor one or more outputs from the photodetector 36, and/or the receiver optical front end circuitry 38 and/or the baseband apparatus 26. These outputs are monitored to determine that the light received by the photodetector 36 is representative of an optical wireless communication signal, e.g. from the remote device.

Any suitable techniques are used in embodiments to determine whether the received light is representative of an optical wireless communication signal.

In some embodiments the controller 22, or any other suitable component, monitors detection signals from the photodetector 36 for the presence of at least one amplitude and/or frequency and/or duration signature in the detection signals. Monitoring for the presence of the signal having at least one predetermined property may comprise monitoring for the presence of at least one carrier and/or sub-carrier. In some embodiments, the signal having at least one predetermined property may comprise a sinusoidal signal and/or a binary phase shift keying (BPSK signal). In some embodiments, the signal may comprise at least one tone that has a value of amplitude above a predetermined threshold amplitude value. In some embodiments, the signal may comprise at least one tone that has a value of duration above a predetermined threshold duration value.

Without reference to a specific modulation scheme, a sub-carrier of a multi-carrier scheme may be selected to carry a wake-up tone. For example, a pilot or data sub-carrier can be selected to carry a wake-up tone. The sub-carrier may be selected to carry a sinusoidal signal and/or a binary phase shift keying (BPSK).

In some embodiments, the wake-up tone can be allocated to a sub-carrier toward a lower end of the signal bandwidth. In that case, a low-bandwidth, low-power receiver can be used to detect the tone. Alternatively, or in addition, a wake-up tone can be allocated to a sub-carrier toward a higher end of the signal bandwidth. In this case, information about the speed of the channel can be extracted. By allocating a wake-up signal towards the higher end of the signal bandwidth, the channel has to incorporate lower frequency information. Therefore, frequency of the wake-up subcarrier gives information of the minimum channel bandwidth.

No demodulation of the received optical signal may be necessary to determine if there is activity on the optical channel in some embodiments.

Various additional or alternative features can be provided in alternative embodiments. For example, in some alternatives the device is a transmitter device and does not include an OWC receiver.

In some embodiments, each detector is associated with a different one of the transmitter and detects the presence of one of more remote devices in the respective field-of-view of that transmitter. In other embodiments, a presence detector may be associated with more than one transmitter and hence more than one field-of-view. In some embodiments, there may be more or fewer detectors than transmitters in the transceiver device. Where there are fewer detectors than transmitters, the fields of view of at least one detector may cover the fields of view of more than one transmitter.

The OWC transceiver device may be one in which the typical overall transmission zone of the OWC transceiver is segregated into multiple sub transmission zones. The transmitters associated with each sub zone may be aligned at an angle to the vertical axis of the transceiver device.

In some embodiments the OWC receiver for receipt of signals transmitted by the remote device(s) may be independent of the transceiver device or transmitter sub zone(s).

In some embodiments the transceiver device may comprise one or more OWC receiver(s) for receiving signals from a remote device or devices when positioned in different OWC transmission sub zones. in some embodiments each transmission sub zone may have an associated OWC receiver for receiving uplink OWC signals from a remote device within or adjacent to the OWC transmission sub zone. In some embodiments the OWC receiver may be configured to receive uplink signals from remote devices located in more than one OWC transmission sub zone and in some configurations only one OWC receiver may be provided to receive uplink OWC signals from remote devices positional in all OWC transmission sub zones.

In some **embodiments** the detector for receiving and decoding of the OWC received signal may be designed for high frequency OWC signal reception performance in low light sensitivity. The detector for the OWC received signal may have a frequency response of greater than 80kHz. The detector for the OWC received signal and the associated electronic circuitry may have an analogue -3dB bandwidth of operation >= 80Mhz, or >= 300Mhz.

In some embodiments the OWC transceiver transmission sub zones and OWC uplink reception sub zones may or may not overlap. Each transmission sub zone may or may not overlap with an adjacent transmission sub zone.

The OWC transceiver may receive at least one uplink signal from at least one remote device which may be mobile or in a fixed position.

An OWC transmitter sub zone may retransmit at least part of an OWC received uplink signal. The retransmission of at least part of the OWC received uplink signal may be in the same direction or aligned to an operating region in an overlapping location as the received signal or may be in a different direction or aligned to different operating region(s). One or more OWC received uplink signals may be retransmitted by at least one transmitter. At least part of one or more OWC received uplink signal(s) may be retransmitted by more than one transmitter where each of the more than one transmitter is directed in a different direction direction to that from which the uplink signal is received. Each of the one or more transmitter may transmit at least part of the OWC received signal. The OWC transceiver device may or may not have a data or network connection. The OWC transceiver device may comprise an amplifier to amplify at least part of the OWC received uplink signal before retransmission.

Presence detectors have been described for determining the presence of a remote device in a particular field-of-view or zone, thereby providing determination of the position of the remote device e.g. within the field-of-view or zone. Any other suitable detector for determining location of a remote device may be used in alternative embodiments.

Although a housing has been described that includes all of the transmitter(s), receiver(s) and/or detector(s) of the device, in some embodiments one or more of the transmitter(s), receiver(s) and/or detector(s) may be provided remote from the housing. For example, at least one of the transmitters (and/or at least one of the receivers and/or detectors) may be connectable via a wired or other connection to the or a unit or housing that includes the controller, such that said at least one of the transmitters (and/or at least one of the receivers and/or detectors) is moveable relative to the unit or housing and/or is positionable to be remote from the housing.

A skilled person will appreciate that variations of the described embodiments are possible without departing from the invention. Accordingly, the above description of specific embodiments is provided by way of example only and not for the purposes of limitation. It will be clear to the skilled person that modifications may be made to the embodiments without departing from the scope of the invention.

## Claims

1. An optical wireless communication, OWC, transceiver apparatus comprising:
a plurality of transmitters (32), each transmitter having a respective field-of-view in respect of which it is configured to transmit OWC signals;
a controller (22) configured to select which of the transmitters transmit the OWC signals, thereby determining a transmission zone to which the OWC signals are transmitted by the apparatus;
one or more OWC receivers (36) for receiving OWC signals transmitted according to an OWC protocol; and
at least one presence detector (20) for determining a location of a remote device,
wherein
the transmission zone comprises at least one sub-zone, each sub-zone corresponding to the field-of-view of a respective one of the transmitters;
the apparatus is configured to transmit the OWC signals to the remote device; and
the selecting of the transmitters to transmit OWC signals comprises selecting one or more of the transmitters in dependence on the determined location of the remote device.

2. An apparatus according to claim 1, wherein the selecting of the transmitter(s) (32) comprises controlling by the controller (22) whether each transmitter is in a higher power state or a lower power state, optionally in a power-on or power-off state; and/or
wherein selecting of the transmitter(s) to transmit OWC signals comprises selecting one or more of the transmitters based on at least one of whether the remote device is determined to be present in, or within a threshold distance, of, or moving towards, or moving away from, the field(s)-of-view of said transmitter(s).

3. An apparatus according to any preceding claim, wherein the at least one presence detector (20) comprises a plurality of presence detectors, each having a respective different presence detector field of view, and optionally at least one of the plurality of presence detectors is associated with a respective different one of the transmitters (32).

4. An apparatus according to any preceding claim wherein each transmitter (32) is associated with a corresponding OWC receiver (36) having a respective receiver field of view in which OWC signals can be received, optionally wherein the field of view of the transmitter is at least partly matched or overlapping with the field of view of the corresponding OWC receiver.

5. An apparatus according to any preceding claim wherein at least one of the OWC transmitter(s) (32) and/or the OWC receiver(s) (36) comprise a freeform optical lens, optionally comprising freeform lenslets, optionally wherein at least one of the freeform optical lenslets has a freeform optical surface that is translationally or cylindrically asymmetric.

6. An apparatus according to claim 5, wherein at least one of the OWC transmitter(s) (32) comprises a freeform optical lens which is configured to map or translate light from a transmitter light source onto a plane of reception in an operating region located in the OWC transmission field of view wherein the mapped or translated light has an intensity distribution of defined shape or perimeter or contour,
optionally wherein the defined shape or perimeter or contour is configured to interface with or match the defined shape or perimeter or contour of a transmission field of view of an adjacent transmitter thereby to reduce overlapping of the respective transmission field of views,
optionally wherein the intensity distribution within the transmission field of view across a plane of reception within the operating region is a uniform intensity distribution.

7. An apparatus according to any preceding claim, wherein the at least one presence detector (20) comprises at least one optical presence detector configured to detect signals from the remote device, optionally wherein at least one of:
the at least one optical presence detector is configured to determine the location of the device based on receipt of OWC signals without decoding the received OWC signals to extract data encoded in the OWC signals;
the at least one optical presence detector (20) comprises a photodetector of lower received signal frequency response and/or sensitivity than the at least one OWC receiver(s) (36) at OWC transmission frequencies; and
the at least one optical presence detector comprises at least one OWC receiver, configured to determine the location of the remote device based on OWC signals received from the remote device.

8. An apparatus according to any preceding claim, wherein:
each presence detector (20) has a field of view that is aligned with and /or at least partially matched to a field of view of a corresponding one or more of the transmitters (32); and/or
the at least one presence detector comprises a plurality of presence detectors with overlapping fields-of-view.

9. An apparatus according to any preceding claim, comprising at least one optical presence detection barrier (120), and/or a freeform optical lens (64), configured to define and/or limit the optical field-of-view of at least one of the presence detectors (20), optionally wherein the at least one optical presence detection barrier comprises a plurality of optical barriers, each associated with a respective one or more of the presence detectors, and/or the freeform optical lens comprises a plurality of optical lenses each associated with a respective one or more of the presence detectors, further optionally wherein the optical presence detection barriers and/or freeform optical lens(es) are configured so that at least some, optionally all, of the optical presence detection fields-of-view adjoin or overlap at the or a target distance from the transceiver apparatus.

10. An apparatus according to any preceding claim, wherein at least one of:
the controller (22) is configured to select and/or deselect the transmitters (32) for transmission of OWC signals to maintain continuity of communication with the or at least one remote device in dependence on the determined location of the remote device;
the controller is configured to vary optical power output for the transmitters selected to transmit the OWC signals in dependence on a measured or expected temperature of at least part of the apparatus and/or a measured or expected temperature of at least one of the transmitters; and
the controller is configured to vary data rate transmission of OWC signals and/or driver circuit power provided to the transmitters selected to transmit the OWC signals in dependence on measured or predicted temperature of at least one of the light sources or transmitters and/or the number and/or location of the transmitters selected to transmit the OWC signals.

11. An apparatus according to any preceding claim, wherein the apparatus comprises at least one heatsink (80, 82, 84) arranged to remove heat from at least one transmitter, optionally wherein the apparatus comprises more than one heat sink, each respective heat sink being associated with a respective transmitter (32) wherein at least one of the heat sink is in thermal connectivity with at least one other of the heat sinks to form a combined heat sink, further optionally wherein the maximum data transfer rate achieved by each transmitter in thermal connection with the combined heat sink is dependent on the number and/or location of other transmitters in operation.

12. An apparatus according to any preceding claim, wherein the transmitter(s) (32) may be configured to at least partially retransmit OWC signals, received by the one or more OWC receivers (36) and/or wherein the one or more OWC receivers and the transmitter or transmitters may have respective fields of view aligned to the same or different operating regions, such that the OWC signals may be received by the one or more OWC receivers from one operating region and at least partially re-transmitted by at least one of the transmitters aligned to the same and/or a different operating region, optionally wherein the re-transmission may be performed following at least partial decoding of the received OWC signals.

13. A method of optical wireless communication comprising selecting one or more transmitters (32) of a plurality of transmitters configured to transmit OWC signals to a remote device, the plurality of transmitters included in a transceiver apparatus, each transmitter having a respective field-of-view in respect of which it is configured to transmit OWC signals, thereby determining a transmission zone to which the OWC signals are transmitted, wherein:
the transmission zone comprises at least one sub-zone, each sub-zone corresponding to the field-of-view of a respective one of the transmitters;
the transceiver apparatus comprises at least one presence detector (20) for determining a location of the remote device; and
the selecting of the transmitters to transmit OWC signals comprises selecting one or more of the transmitters in dependence on the determined location of the remote device.

14. An optical wireless communication system comprising:
an apparatus according to any of claims 1 to 12 configured to communicate with at least one remote device; and
the at least one remote device.

15. An optical wireless communication system comprising a plurality of OWC transceiver apparatus according to any of claims 1 to 12 wherein at least one of the plurality of OWC transceiver apparatus is orientated and positioned such a transmission field of view and/or a receiver field of view of the at least one OWC transceiver apparatus are aligned to different operating regions or are directed in different directions compared to the transmission field of view and/or reception field of view of a further one of the plurality of OWC transceiver apparatus;
optionally wherein at least two of the plurality of OWC transceiver apparatus are each configured with a baseband or modem device (26); and
further optionally wherein at least two of the plurality of OWC transceiver apparatus share functionality and/or associated electric circuitry such as for example processing resource or power supply resource.

## Patentansprüche

1. Optische drahtlose Kommunikations-Sendeempfänger-Einrichtung, OWC-Sendeempfänger-Einrichtung, umfassend:
eine Vielzahl von Sendern (32), wobei jeder Sender ein jeweiliges Sichtfeld aufweist, bezüglich dessen er konfiguriert ist, OWC-Signale zu senden;
eine Steuereinheit (22), die konfiguriert ist, auszuwählen, der der Sender die OWC-Signale sendet, wodurch eine Sendezone bestimmt wird, an die die OWC-Signale von der Einrichtung gesendet werden;
einen oder mehrere OWC-Empfänger (36) zum Empfangen von OWC-Signalen, die gemäß einem OWC-Protokoll gesendet werden; und
mindestens einen Präsenzdetektor (20) zum Bestimmen einer Stelle einer entfernten Vorrichtung, wobei
die Sendezone mindestens eine Teilzone umfasst, wobei jede Teilzone dem Sichtfeld eines jeweiligen der Sender entspricht;
die Einrichtung konfiguriert ist, die OWC-Signale an die entfernte Vorrichtung zu senden; und
das Auswählen der Sender zum Senden von OWC-Signalen Auswählen eines oder mehrerer der Sender in Abhängigkeit von der bestimmten Stelle der entfernten Vorrichtung umfasst.

2. Einrichtung nach Anspruch 1, wobei das Auswählen des (der) Sender(s) (32) Steuern durch die Steuereinheit (22) umfasst, ob sich jeder Sender in einem Zustand höherer Leistung oder einem Zustand niedrigerer Leistung, optional in einem Ein- oder Aus-Zustand befindet; und/oder
wobei Auswählen des (der) Sender(s) zum Senden von OWC-Signalen Auswählen eines oder mehrerer der Sender basierend auf mindestens einem davon umfasst, ob die entfernte Vorrichtung bestimmt ist, in, oder innerhalb einer Schwellendistanz, sich darauf bewegend oder davon wegbewegend, von dem (den) Sichtfeld(ern) des (der) Sender zu sein.

3. Einrichtung nach einem vorstehenden Anspruch, wobei der mindestens eine Präsenzdetektor (20) eine Vielzahl von Präsenzdetektoren umfasst, von denen jeder ein jeweiliges unterschiedliches Präsenzdetektor-Sichtfeld aufweist, und optional mindestens einer der Vielzahl von Präsenzdetektoren einem jeweiligen unterschiedlichen der Sender (32) zugeordnet ist.

4. Einrichtung nach einem vorstehenden Anspruch, wobei jeder Sender (32) einem entsprechenden OWC-Empfänger (36) zugeordnet ist, der ein jeweiliges Empfängersichtfeld aufweist, in dem OWC-Signale empfangen werden können, optional wobei das Sichtfeld des Senders mindestens teilweise mit dem Sichtfeld des entsprechenden OWC-Empfängers übereinstimmt oder überlappt.

5. Einrichtung nach einem vorstehenden Anspruch, wobei mindestens einer des (der) OWC-Sender(s) (32) und/oder des (der) OWC-Empfänger(s) (36) eine optische Freiform-Linse umfasst, optional Freiform-Mikrolinsen umfassend, optional wobei mindestens eine der optischen Freiform-Mikrolinsen eine optische Freiform-Oberfläche aufweist, die translatorisch oder zylindrisch asymmetrisch ist.

6. Einrichtung nach Anspruch 5, wobei mindestens einer des (der) OWC-Sender(s) (32) eine optische Freiform-Linse umfasst, die konfiguriert ist, Licht von einer Senderlichtquelle auf eine Empfangsebene in einem Betriebsbereich abzubilden oder umzusetzen, der sich in dem OWC-Sendesichtfeld befindet, wobei das abgebildete oder umgesetzte Licht eine Intensitätsverteilung mit definierter Form oder Umfang oder Kontur aufweist,
optional wobei die definierte Form, Umfang oder Kontur konfiguriert ist, sich mit der definierten Form, Umfang oder Kontur eines Sendesichtfelds eines benachbarten Senders zu vernetzen oder übereinzustimmen, um dadurch eine Überlappung des jeweiligen Sendesichtfelds zu verringern,
optional wobei die Intensitätsverteilung innerhalb des Sendesichtfelds über eine Empfangsebene innerhalb des Betriebsbereichs eine gleichmäßige Intensitätsverteilung ist.

7. Einrichtung nach einem vorstehenden Anspruch, wobei der mindestens eine Präsenzdetektor (20) mindestens einen optischen Präsenzdetektor umfasst, der konfiguriert ist, Signale von der entfernten Vorrichtung zu erfassen, optional wobei mindestens einer von:
dem mindestens einen optischen Präsenzdetektor konfiguriert ist, die Stelle der Vorrichtung basierend auf Empfang von OWC-Signalen zu bestimmen, ohne die empfangenen OWC-Signale zum Extrahieren von in den OWC-Signalen kodierten Daten zu dekodieren;
dem mindestens einen optischen Präsenzdetektor (20) einen Fotodetektor mit niedrigerer empfangener Signalfrequenzantwort und/oder Empfindlichkeit als der mindestens eine OWC-Empfänger (36) bei OWC-Sendefrequenzen umfasst; und
dem mindestens einen optischen Präsenzdetektor mindestens einen OWC-Empfänger umfasst, der konfiguriert ist, die Stelle der entfernten Vorrichtung basierend auf OWC-Signalen zu bestimmen, die von der entfernten Vorrichtung empfangen werden.

8. Einrichtung nach einem vorstehenden Anspruch, wobei:
jeder Präsenzdetektor (20) ein Sichtfeld aufweist, das mit einem Sichtfeld eines oder mehrerer entsprechender Sender (32) ausgerichtet ist und/oder mindestens teilweise übereinstimmt; und/oder
der mindestens eine Präsenzdetektor eine Vielzahl von Präsenzdetektoren mit überlappenden Sichtfeldern umfasst.

9. Einrichtung nach einem vorstehenden Anspruch, die mindestens eine optische Präsenzerfassungsbarriere (120), und/oder eine optische Freiform-Linse (64) umfasst, die konfiguriert ist, das optische Sichtfeld mindestens eines der Präsenzdetektoren (20) zu definieren und/oder begrenzen, optional wobei die mindestens eine optische Präsenzerfassungsbarriere eine Vielzahl von optischen Barrieren umfasst, die jeweils einem jeweiligen einen oder mehreren Präsenzdetektoren zugeordnet sind, und/oder die optische Freiform-Linse eine Vielzahl von optischen Linsen umfasst, die jede einem jeweiligen einen oder mehreren der Präsenzdetektoren zugeordnet ist, weiter optional wobei die optischen Präsenzerfassungsbarrieren und/oder optische(n) Freiform-Linse(n) konfiguriert sind, sodass mindestens einige, optional alle, der optischen Präsenzerfassungssichtfelder bei der oder einer Zieldistanz von der Sendeempfänger-Einrichtung benachbart liegen oder überlappen.

10. Einrichtung nach einem vorstehenden Anspruch, wobei mindestens eine von:
der Steuereinheit (22) konfiguriert ist, die Sender (32) zum Senden von OWC-Signalen auszuwählen und/oder abzuwählen, um Kontinuität von Kommunikation mit der oder mindestens einer entfernten Vorrichtung in Abhängigkeit von der bestimmten Stelle der entfernten Vorrichtung aufrechtzuerhalten;
der Steuereinheit konfiguriert ist, optische Leistungsausgabe für die Sender zu variieren, die ausgewählt sind, um die OWC-Signale in Abhängigkeit von einer gemessenen oder erwarteten Temperatur mindestens eines Teils der Einrichtung und/oder einer gemessenen oder erwarteten Temperatur mindestens eines der Sender zu senden; und
der Steuereinheit konfiguriert ist, Datenratensendung von OWC-Signalen und/oder Treiberschaltungsleistung zu variieren, die für die Sender bereitgestellt wird, die ausgewählt werden, um die OWC-Signale in Abhängigkeit von gemessener oder vorhergesagter Temperatur mindestens einer der Lichtquellen oder Sender und/oder der Anzahl und/oder Stelle der Sender zu senden, die ausgewählt sind, um die OWC-Signale zu senden.

11. Einrichtung nach einem vorstehenden Anspruch, wobei die Einrichtung mindestens einen Kühlkörper (80, 82, 84) umfasst, der angeordnet ist, Wärme von mindestens einem Sender abzuführen, optional wobei die Einrichtung mehr als einen Kühlkörper umfasst, wobei jeder jeweilige Kühlkörper einem jeweiligen Sender (32) zugeordnet ist, wobei mindestens ein Kühlkörper mit mindestens einem anderen der Kühlkörper in thermischer Verbindung steht, um einen kombinierten Kühlkörper zu bilden, weiter optional wobei die von jedem Sender in thermischer Verbindung mit dem kombinierten Kühlkörper erzielte maximale Datenübertragungsrate von der Anzahl und/oder Stelle anderer in Betrieb befindlicher Sender abhängig ist.

12. Einrichtung nach einem vorstehenden Anspruch, wobei der (die) Sender (32) konfiguriert sein kann (können), mindestens teilweise OWC-Signale erneut zu senden, die von dem einen oder mehreren OWC-Empfängern (36) empfangen werden, und/oder wobei der eine oder mehrere OWC-Empfänger und der Sender oder die Sender jeweilige Sichtfelder aufweisen können, die auf dieselben oder unterschiedliche Betriebsbereiche ausgerichtet sind, sodass die OWC-Signale von dem einen oder den mehreren OWC-Empfängern aus einem Betriebsbereich empfangen und mindestens teilweise von mindestens einem der Sender erneut gesendet werden können, der auf denselben und/oder einen unterschiedlichen Betriebsbereich ausgerichtet ist, optional wobei das erneute Senden infolge mindestens einer Teildekodierung der empfangenen OWC-Signale durchgeführt werden kann.

13. Verfahren zur optischen drahtlosen Kommunikation, das Auswählen eines oder mehrerer Sender (32) einer Vielzahl von Sendern umfasst, die konfiguriert sind, OWC-Signale an eine entfernte Vorrichtung zu senden, wobei die Vielzahl von Sendern in einer Sendeempfänger-Einrichtung beinhaltet ist, wobei jeder Sender ein jeweiliges Sichtfeld aufweist, bezüglich dessen er konfiguriert ist, OWC-Signale zu senden, wodurch eine Sendezone bestimmt wird, an die die OWC-Signale gesendet werden, wobei: die Sendezone mindestens eine Teilzone umfasst, wobei jede Teilzone dem Sichtfeld eines jeweiligen der Sender entspricht;
die Sendeempfänger-Einrichtung mindestens einen Präsenzdetektor (20) zum Bestimmen einer Stelle der entfernten Vorrichtung umfasst; und
das Auswählen der Sender zum Senden von OWC-Signalen Auswählen eines oder mehrerer der Sender in Abhängigkeit von der bestimmten Stelle der entfernten Vorrichtung umfasst.

14. Optisches drahtloses Kommunikationssystem, umfassend:
eine Einrichtung nach einem der Ansprüche 1 bis 12, die konfiguriert ist, mit mindestens einer entfernten Vorrichtung zu kommunizieren; und
die mindestens eine entfernte Vorrichtung.

15. Optisches drahtloses Kommunikationssystem, das eine Vielzahl von OWC-Sendeempfänger-Einrichtungen nach einem der Ansprüche 1 bis 12 umfasst, wobei mindestens eine der Vielzahl von OWC-Sendeempfänger-Einrichtungen orientiert und positioniert ist, sodass ein Sendesichtfeld und/oder ein Empfängersichtfeld der mindestens einen OWC-Sendeempfänger-Einrichtung auf unterschiedliche Betriebsbereiche ausgerichtet sind oder in unterschiedliche Richtungen im Vergleich zum Sendesichtfeld und/oder Empfängersichtfeld einer weiteren der Vielzahl von OWC-Sendeempfänger-Einrichtungen gerichtet sind;
optional wobei mindestens zwei der Vielzahl von OWC-Sendeempfänger-Einrichtungen jeweils mit einer Basisband- oder Modem-Vorrichtung (26) konfiguriert sind; und
weiter optional wobei mindestens zwei der Vielzahl von OWC-Sendeempfänger-Einrichtungen sich eine Funktionalität und/oder eine zugeordnete elektrische Schaltung, wie zum Beispiel eine Verarbeitungsressource oder Leistungsversorgungsressourcen, teilen.

## Revendications

1. Appareil émetteur-récepteur de communication sans fil optique (OWC) comprenant :
une pluralité d'émetteurs (32), chaque émetteur présentant un champ optique respectif par rapport auquel il est configuré pour émettre des signaux OWC ;
un dispositif de commande (22) configuré pour sélectionner lequel des émetteurs émet les signaux OWC, déterminant ainsi une zone d'émission vers laquelle les signaux OWC sont émis par l'appareil ;
un ou plusieurs récepteurs OWC (36) pour recevoir des signaux OWC émis selon un protocole OWC ; et
au moins un détecteur de présence (20) pour déterminer un emplacement d'un dispositif distant, dans lequel
la zone d'émission comprend au moins une sous-zone, chaque sous-zone correspondant au champ optique d'un émetteur respectif parmi les émetteurs ;
l'appareil est configuré pour émettre les signaux OWC vers le dispositif distant ; et
la sélection des émetteurs destinés à émettre des signaux OWC comprend la sélection des un ou plusieurs des émetteurs en fonction de l'emplacement déterminé du dispositif distant.

2. Appareil selon la revendication 1, dans lequel la sélection du ou des émetteurs (32) comprend la commande par le dispositif de commande (22) pour définir si chaque émetteur est dans un état de puissance supérieure ou dans un état de puissance inférieure, facultativement dans un état allumé ou éteint ; et/ou
dans lequel la sélection du ou des émetteurs destinés à émettre des signaux OWC comprend la sélection d'un ou plusieurs des émetteurs sur la base d'au moins un des critères suivants : s'il est déterminé que le dispositif distant est présent dans le ou les champs optiques dudit ou desdits émetteurs, ou à moins d'une distance seuil, ou se déplace vers ceux-ci, ou s'éloigne de ceux-ci.

3. Appareil selon une quelconque revendication précédente, dans lequel le au moins un détecteur de présence (20) comprend une pluralité de détecteurs de présence, chacun présentant un champ optique de détecteur de présence différent respectif, et facultativement au moins un de la pluralité de détecteurs de présence est associé à un émetteur différent respectif parmi les émetteurs (32).

4. Appareil selon une quelconque revendication précédente, dans lequel chaque émetteur (32) est associé à un récepteur OWC correspondant (36) présentant un champ optique de récepteur respectif, dans lequel des signaux OWC peuvent être reçus, facultativement dans lequel le champ optique de l'émetteur correspond ou chevauche au moins partiellement le champ optique du récepteur OWC correspondant.

5. Appareil selon une quelconque revendication précédente, dans lequel au moins un des émetteurs OWC (32) et/ou des récepteurs OWC (36) comprend une lentille optique à forme libre, comprenant facultativement des microlentilles à forme libre, facultativement dans lequel au moins une des microlentilles optiques à forme libre présente une surface optique à forme libre qui est asymétrique en translation ou en rotation cylindrique.

6. Appareil selon la revendication 5, dans lequel au moins un des émetteurs OWC (32) comprend une lentille optique à forme libre qui est configurée pour projeter ou translater la lumière provenant d'une source lumineuse émettrice sur un plan de réception dans une région de fonctionnement située dans le champ optique d'émission OWC, dans lequel la lumière projetée ou translatée présente une distribution d'intensité de forme, de périmètre ou de contour défini,
facultativement dans lequel la forme, le périmètre ou le contour défini est configuré pour s'interfacer avec ou correspondre à la forme, au périmètre ou au contour défini d'un champ optique d'émission d'un émetteur adjacent, réduisant ainsi le chevauchement des champs optiques d'émission respectifs,
facultativement dans lequel la distribution d'intensité dans le champ optique d'émission sur un plan de réception dans la zone de fonctionnement est une distribution d'intensité uniforme.

7. Appareil selon une quelconque revendication précédente, dans lequel le au moins un détecteur de présence (20) comprend au moins un détecteur de présence optique configuré pour détecter des signaux provenant du dispositif distant, facultativement dans lequel au moins un parmi :
le au moins un détecteur de présence optique est configuré pour déterminer l'emplacement du dispositif sur la base de la réception de signaux OWC sans décoder les signaux OWC reçus pour extraire des données codées dans les signaux OWC ;
le au moins un détecteur de présence optique (20) comprend un photodétecteur ayant une réponse en fréquence et/ou une sensibilité au signal reçu inférieure à celle du au moins un récepteur OWC (36) aux fréquences d'émission OWC ; et
le au moins un détecteur de présence optique comprend au moins un récepteur OWC configuré pour déterminer l'emplacement du dispositif distant sur la base de signaux OWC reçus du dispositif distant.

8. Appareil selon une quelconque revendication précédente, dans lequel :
chaque détecteur de présence (20) présente un champ optique qui est aligné sur et/ou correspond au moins partiellement à un champ optique d'un ou plusieurs émetteurs correspondants parmi les émetteurs (32) ; et/ou
le au moins un détecteur de présence comprend une pluralité de détecteurs de présence ayant des champs optiques qui se chevauchent.

9. Appareil selon une quelconque revendication précédente, comprenant au moins une barrière de détection de présence optique (120), et/ou une lentille optique à forme libre (64), configurée pour définir et/ou limiter le champ optique d'au moins un des détecteurs de présence (20), facultativement dans lequel l'au moins une barrière de détection de présence optique comprend une pluralité de barrières optiques, chacune associée à un ou plusieurs respectifs des détecteurs de présence, et/ou la lentille optique à forme libre comprend une pluralité de lentilles optiques, chacune associée à un ou plusieurs respectifs des détecteurs de présence, facultativement en outre dans lequel les barrières de détection de présence optique et/ou la ou les lentille(s) optique(s) à forme libre sont configurées de manière à ce qu'au moins certains, voire la totalité, des champs optiques de détection de présence optique soient contigus ou se chevauchent à la ou à une distance cible de l'appareil émetteur-récepteur.

10. Appareil selon une quelconque revendication précédente, dans lequel au moins un parmi :
le dispositif de commande (22) est configuré pour sélectionner et/ou désélectionner les émetteurs (32) pour l'émission de signaux OWC afin de maintenir la continuité de la communication avec le ou au moins un dispositif distant en fonction de l'emplacement déterminé du dispositif distant ;
le dispositif de commande est configuré pour faire varier la sortie de puissance optique pour les émetteurs sélectionnés pour émettre les signaux OWC en fonction d'une température mesurée ou attendue d'au moins une partie de l'appareil et/ou d'une température mesurée ou attendue d'au moins un des émetteurs ; et
le dispositif de commande est configuré pour faire varier la transmission à débit de données des signaux OWC et/ou la puissance du circuit d'attaque délivrée aux émetteurs sélectionnés pour émettre les signaux OWC en fonction de la température mesurée ou attendue d'au moins une des sources lumineuses ou des émetteurs et/ou du nombre et/ou de l'emplacement des émetteurs sélectionnés pour émettre les signaux OWC.

11. Appareil selon une quelconque revendication précédente, dans lequel l'appareil comprend au moins un dissipateur thermique (80, 82, 84) agencé pour évacuer la chaleur d'au moins un émetteur, facultativement dans lequel l'appareil comprend plus d'un dissipateur thermique, chaque dissipateur thermique respectif étant associé à un émetteur respectif (32), dans lequel au moins un des dissipateurs thermiques est en connectivité thermique avec au moins un autre des dissipateurs thermiques pour former un dissipateur combiné, en outre, facultativement en outre dans lequel le débit de transfert de données maximal atteint par chaque émetteur en liaison thermique avec le dissipateur thermique combiné dépend du nombre et/ou de l'emplacement d'autres émetteurs en fonctionnement.

12. Appareil selon une quelconque revendication précédente, dans lequel le ou les émetteurs (32) peuvent être configurés pour retransmettre au moins partiellement des signaux OWC, reçus par les un ou plusieurs récepteurs OWC (36) et/ou dans lequel les un ou plusieurs récepteurs OWC et le ou les émetteurs peuvent présenter des champs optiques respectifs alignés sur les mêmes régions de fonctionnement ou sur des régions de fonctionnement différentes, de sorte que les signaux OWC puissent être reçus par les un ou plusieurs récepteurs OWC d'une région de fonctionnement et au moins partiellement retransmis par au moins un des émetteurs alignés sur la même région de fonctionnement et/ou une région de fonctionnement différente, facultativement dans lequel la retransmission peut être effectuée après un décodage au moins partiel des signaux OWC reçus.

13. Procédé de communication sans fil optique comprenant la sélection d'un ou plusieurs émetteurs (32) d'une pluralité d'émetteurs configurés pour émettre des signaux OWC vers un dispositif distant, la pluralité d'émetteurs étant incluse dans un appareil émetteur-récepteur, chaque émetteur présentant un champ optique respectif par rapport auquel il est configuré pour émettre des signaux OWC, déterminant ainsi une zone d'émission vers laquelle les signaux OWC sont émis, dans lequel : la zone d'émission comprend au moins une sous-zone, chaque sous-zone correspondant au champ optique d'un émetteur respectif des émetteurs ;
l'appareil émetteur-récepteur comprend au moins un détecteur de présence (20) permettant de déterminer un emplacement du dispositif distant ; et
la sélection des émetteurs destinés à émettre des signaux OWC comprend la sélection des un ou plusieurs des émetteurs en fonction de l'emplacement déterminé du dispositif distant.

14. Système de communication sans fil optique comprenant :
un appareil selon l'une quelconque des revendications 1 à 12 configuré pour communiquer avec au moins un dispositif distant ; et
le au moins un dispositif distant.

15. Système de communication sans fil optique comprenant une pluralité d'appareils émetteurs-récepteurs OWC selon l'une quelconque des revendications 1 à 12, dans lequel au moins un de la pluralité d'appareils émetteurs-récepteurs OWC est orienté et positionné de telle façon qu'un champ optique d'émission et/ou un champ optique de récepteur du au moins un appareil émetteur-récepteur OWC sont alignés sur des régions de fonctionnement différentes ou sont dirigés dans des directions différentes par rapport au champ optique d'émission et/ou au champ optique de réception d'un autre appareil de la pluralité d'appareils émetteurs-récepteurs OWC ;
facultativement dans lequel au moins deux de la pluralité d'appareils émetteurs-récepteurs OWC sont chacun configurés avec un dispositif de bande de base ou de modem (26) ; et
en outre facultativement dans lequel au moins deux de la pluralité d'appareils émetteurs-récepteurs OWC partagent des fonctionnalités et/ou des circuits électriques associés, tels que par exemple une ressource de traitement ou une ressource d'alimentation électrique.
